# EUROPEAN PATENT APPLICATION

(11) **EP 4 763 131 A1**
(43) Date of publication of application: **24.06.2026**
(21) Application number: 25219088.9
(22) Date of filing: 27.11.2025
(51) Int. Cl.: A61C 5/20, A61C 7/00, A61C 13/00, B33Y 80/00

(54) **METHOD OF MANUFACTURING A REMOVABLE DENTAL APPLIANCE**

(30) Priority: 18.12.2024 US 202418986498; 18.12.2024 US 202418986551; 18.12.2024 US 202418986523
(71) Applicant: OraBeautics Group GmbH, 50858 Köln (DE)
(72) Inventor: WINKEL, Sven, 50858 Köln (DE)
(74) Representative: Fischer, Uwe

(57) **Abstract**

Various implementations of removable dental appliances, including multi-unit veneers to improve the aesthetics and function of a smile of a dental customer, related systems, and computer programs and methods for the design and manufacturing of removable dental appliances are disclosed. For example, surface tension and capillary action between the patient's or customer's teeth, saliva and surfaces of the removable dental appliance are utilized to substantially hold the appliance in place, once inserted. For example, a clip-on fit involving exclusively vestibular-facing undercuts between the patient's or customer's teeth are utilized to substantially hold the appliance in place, once inserted. The appliance is manufactured by additive or subtractive manufacturing technologies and may gain stability from a resin-based coating.

## Description

### BACKGROUND

### FIELD

This disclosure relates generally to removable dental appliances and to techniques to design and manufacture such devices. The present application claims the benefit and priority to US patent application US18/986,498 filed on 18.12.2024, US patent application US 18/986,551 filed on 18.12.2024, and US patent application 18/986,523 filed on 18.12.2024, the entire disclosure of which is hereby incorporated by reference herein.

### DESCRIPTION OF RELATED ART

In medicine, orthopedic and craniofacial laboratories and manufacturers are providing materials and medical devices to repair, augment and replace hard and soft tissue body parts. Physicians apply various clinical techniques utilizing the materials and medical devices for clinical rehabilitation or enhancement.

Dentistry is a branch of medicine that includes the restoration or replacement of teeth as embedded in the oral mucosa, and in the jawbone of a patient. Dental laboratories and industrial manufacturers are providing materials and medical devices to repair, augment and replace single or a plurality of teeth, or portions thereof. Dentists apply various clinical techniques utilizing the materials and medical devices for oral rehabilitation or enhancement.

In dentistry, a veneer is typically a layer of material placed over a tooth or over multiple teeth in a row, also referred to as a full or multiple-unit veneer, to improve the aesthetics and function of a smile. Veneers can be adhesively affixed to a tooth or multiple teeth. Full veneers may be removable. Certain veneer types are offered as cosmetic devices.

Established design and manufacturing modalities, techniques of shaping, and techniques of conditioning veneers or other removable dental appliances, have deficiencies and limitations. Often, multi-unit veneers fail caused by overload when clinically placed or when inserted or removed. Further, most shaping, heat treatment, and surface conditioning technologies are complex, expensive, and require suboptimal step-by-step sequences with long machine lead times. When made of pre-sintered or pressed ceramic blanks, after sintering, some ceramics are too hard to be machined efficiently. In addition, toxic chemical residues from cooling lubricants and/or etchants used in manufacturing may require extensive cleaning before medical devices can be considered safe for clinical use.

Some dental appliances surround the patient's real teeth while the outer surface is shaped to show simulated teeth in an ideal configuration. However, these appliances are often bulky and retentive areas may not be sufficiently available to reliably affix the appliance to the dentition that a certain patient presents.

Further, the interactive design of custom-shaped portions of partial or full veneers or other removable dental appliances is time-consuming and requires skilled and trained technicians or engineers.

All these effects, alone or in combination, may pose technical and/or economic problems. It is with these observations in mind, among others, that various aspects of the present disclosure were conceived and developed.

### SUMMARY

Systems, methods, techniques, and devices presented herein address the foregoing problems by efficiently designing, shaping, conditioning, and/or functionalizing removable dental appliances to thereby enhance aesthetics and function of a smile of a dental patient or customer.

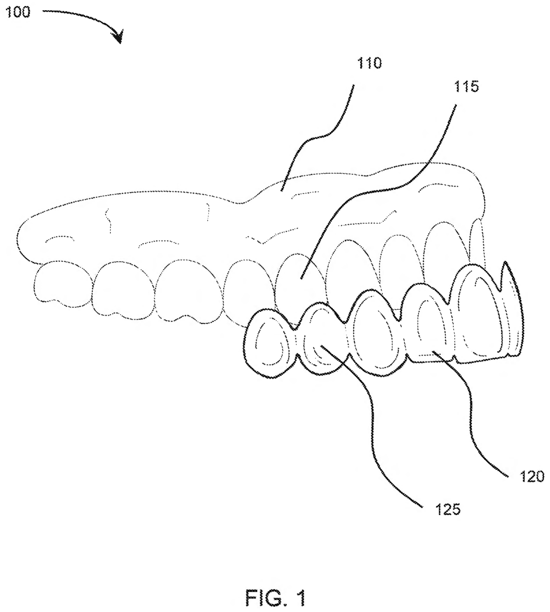

The technology disclosed herein is illustrated, for example, according to various aspects described below, including with reference to figures, FIGS. **1** to **10**. Various examples of aspects of the technology disclosed herein are described as numbered clauses (1, 2, 3, etc.) for convenience. These are provided as examples and do not limit the subject technology.

In some examples, a removable dental appliance includes an archform layer of biocompatible material custom-shaped to fit to a row of teeth of a person, the archform layer having a first custom-shaped surface, and a second surface, the first custom-shaped surface and the second surface face opposite sides of the archform layer. The removable dental appliance can also include the first custom-shaped surface including a plurality of concave appliance surfaces. A concave appliance surface of the plurality of concave appliance surfaces can form a capillary interface with a corresponding vestibular-facing convex crown surface of a plurality of vestibular-facing convex crown surfaces of a plurality of teeth of the row of teeth when the dental appliance is engaged with the row of teeth.

In some instances, the capillary interface can create a capillary adhesive force between at least one of the plurality of concave appliance surfaces and at least one of the plurality of corresponding vestibular-facing convex crown surfaces when the dental appliance is engaged with the row of teeth by using saliva to form a capillary bridge within the capillary interface, resulting in the capillary adhesive force holding the dental appliance in position adjacent to the row of teeth. Also, the second surface can include a plurality of convex appliance surfaces which mimics a corresponding surface of at least one artificial crown of a plurality of artificial crowns arranged as a row of artificial teeth. Additionally, the second surface can be custom-shaped. Furthermore, the dental appliance can be shaped to not encase an oral-facing surface of a crown of a tooth included in the row of teeth when the dental appliance is engaged with the row of teeth.

In some scenarios, the archform layer can have a modulation of thickness in a direction substantially along the archform of the archform layer. The modulation of thickness can correlate at least partially with an arrangement of the plurality of concave appliance surfaces. Also, the modulation of thickness can have at least two local minima of thickness. Additionally or alternatively, the modulation of thickness can have at least two local maxima of thickness. Furthermore, the first custom-shaped surface can include one or more oral-facing surfaces that encase one or more vestibular-facing undercuts of surfaces of a plurality of crowns of the plurality of teeth when the dental appliance is engaged with the row of teeth. The biocompatible material can include a plastic material. Also, at least one of the first custom-shaped surface or the second surface can be coated with a plastic material.

In some examples, a removable dental appliance includes an archform layer of biocompatible material custom-shaped to fit a row of teeth of a person. The archform layer can have a first custom-shaped surface, and a second surface, the first custom-shaped surface and the second surface can face opposite sides of the archform layer. Additionally, the first custom-shaped surface can include a plurality of concave appliance surfaces, and a concave appliance surface of the plurality of concave appliance surfaces can correlate with a corresponding vestibular-facing convex crown surface of a plurality of corresponding vestibular-facing convex crown surfaces of a plurality of teeth of the row of teeth. Moreover, the second surface can include a plurality of convex appliance surfaces, a convex appliance surface of the plurality of convex appliance surfaces can mimic a corresponding surface of an artificial crown of a plurality of artificial crowns arranged as a row of artificial teeth.

In some instances, the second surface is custom-shaped. Also, the removable dental appliance can be shaped to not encase an oral-facing surface of a crown of a tooth included in the row of teeth when the removable dental appliance is engaged with the row of teeth. The archform layer can have a modulation of thickness in a direction substantially along an archform of the archform layer. Furthermore, the modulation of thickness can correlate at least partially with an arrangement of the plurality of convex appliance surfaces, and at least partially with an arrangement of the plurality of concave appliance surfaces. The modulation of thickness can have at least two local minima of thickness. Also, the modulation of thickness can have at least two local maxima of thickness.

In some scenarios, the first custom-shaped surface can include one or more oral-facing surfaces that encase one or more vestibular-facing undercuts of surfaces of a plurality of crowns of the plurality of teeth when the dental appliance is engaged with the row of teeth. The encasing of the one or more vestibular-facing undercuts can hold the dental appliance in position adjacent to the row of teeth when the dental appliance is engaged with the row of teeth. Also, at least one concave appliance surface of the plurality of concave appliance surfaces can form a capillary interface with the corresponding vestibular-facing convex crown surface when the dental appliance is engaged with the row of teeth. The capillary interface can create a capillary adhesive force between the at least one concave appliance surface and the corresponding vestibular-facing convex crown when the dental appliance is engaged with the row of teeth and when saliva is present to form a capillary bridge within the capillary interface, resulting in the capillary adhesive force contributing to holding the dental appliance in position adjacent the row of teeth when the dental appliance is engaged with the row of teeth. Additionally, the biocompatible material can include a plastic material. Moreover, at least one of the first custom-shaped surface or the second surface can be coated with a plastic material.

In some examples, a manufacturing system for fabricating a removable dental appliance can include computer numerical control data storable on one or more non-transitory processor-readable memory as computer-executable instructions. The computer numerical control data can include a first custom-shaped surface model and a second surface model. The first custom-shaped surface model and the second surface model can face opposite virtual sides of an archform layer model. The archform layer model can have a modulation of virtual thickness in a virtual direction substantially along a virtual archform of the archform layer model. Additionally, a computer numerical controlled machine can be operable to custom-shape a workpiece of biocompatible material responsive to the computer numerical control data. The manufacturing system can also include an archform layer of biocompatible material custom-shaped to fit to a row of teeth of a pre-identified person. The archform layer can have a first custom-shaped surface and a second surface. The first custom-shaped surface and the second surface can face opposite sides of the archform layer, and the archform layer can have a modulation of thickness in a direction substantially along an archform of the archform layer. Additionally, the manufacturing system can include a technical specification identifying the archform layer as a semi-finished or finished workpiece to become a removable dental appliance tailored to engage with the row of teeth of the pre-identified person. The first custom-shaped surface can correlate in its spatial dimensional shape with the first custom-shaped surface model. Also, the second surface can correlate in its spatial dimensional shape with the second surface model, and the modulation of thickness can correlate to the modulation of virtual thickness.

In some instances, the computer numerical controlled machine can include a 3D printer using additive manufacturing technology. Also, the biocompatible material can include a UV curable resin; and/or the manufacturing system can further include a curing device using UV light operable to cure a workpiece made of UV curable resin. Additionally, at least one of the first custom-shaped surface or the second surface can be coated with a plastic material. The computer numerical controlled machine can include a milling machine using subtractive manufacturing technology. Moreover, the biocompatible material can include a ceramic material. The modulation of virtual thickness can have at least two local minima of virtual thickness and/or at least two local maxima of virtual thickness. Additionally, the modulation of thickness can have at least two local minima of thickness and/or at least two local maxima of thickness. The first custom-shaped surface can include a plurality of concave appliance surfaces, and at least one concave appliance surface of the plurality of concave appliance surfaces can correlate with a corresponding vestibular-facing convex crown surface of a plurality of corresponding vestibular-facing convex crown surfaces of a plurality of teeth of the row of teeth.

In some scenarios, the first custom-shaped surface can include a plurality of concave appliance surfaces, at least one concave appliance surface of the plurality of concave appliance surfaces can form a capillary interface with a corresponding vestibular-facing convex crown surface of a plurality of corresponding vestibular-facing convex crown surfaces of a plurality of teeth of the row of teeth when the removable dental appliance is engaged with the row of teeth. The capillary interface can create a capillary adhesive force between the at least one concave appliance surface and the corresponding vestibular-facing convex crown surface when the removable dental appliance is engaged with the row of teeth and when saliva is present to form a capillary bridge within the capillary interface, which can result in the capillary adhesive force holding the removable dental appliance in position adjacent to the row of teeth. Moreover, the second surface can include a plurality of convex appliance surfaces, at least one convex appliance surface of the plurality of convex appliance surfaces mimics a corresponding surface of an artificial crown of a plurality of artificial crowns arranged as a row of artificial teeth.

In some examples, the modulation of thickness can correlate at least partially with an arrangement of a plurality of convex appliance surfaces, and at least partially with an arrangement of a plurality of concave appliance surfaces. Also, the second surface can be custom-shaped. Additionally, the removable dental appliance can be shaped to not encase an oral-facing surface of a crown of a tooth included in the row of teeth when the removable dental appliance is engaged with the row of teeth. The first custom-shaped surface can include one or more oral-facing surfaces that encase one or more vestibular-facing undercuts of surfaces of a plurality of crowns of the row of teeth when the removable dental appliance is engaged with the row of teeth. Furthermore, the biocompatible material can include a plastic material. The manufacturing system can also include a sintering furnace operable to sinter a workpiece made from pressed ceramic material.

In some instances, a method of manufacturing a removable dental appliance includes obtaining imaging data storable on one or more non-transitory processor-readable memory representing a row of teeth of a pre-identified person. The method can also include deriving from the imaging data a first surface model storable on the one or more non-transitory processor-readable memory. The first surface model can include a plurality of concave appliance surfaces models, and at least one concave appliance surface model of the plurality of concave appliance surfaces models can correlate to a convex surface area of a corresponding a crown of a tooth included in the row of teeth. The method can also include obtaining a second surface model storable on the one or more non-transitory processor-readable memory. The second surface model can include a plurality of convex appliance surfaces models, and at least one convex appliance surface model of the plurality of convex appliance surfaces models can mimic a corresponding surface of an artificial crown model of a plurality of artificial crown models arranged as a model of a row of artificial teeth. Furthermore, the method can include deriving an archform layer model storable on the one or more non-transitory processor-readable memory. The archform layer model can include the first surface model and the second surface model. The first surface model and the second surface model can face opposite virtual sides of the archform layer model, and/or the archform layer model can have a modulation of virtual thickness in a virtual direction substantially along an archform of the archform layer model.

In some scenarios, the method can further include storing the archform layer model at the one or more non-transitory processor-readable memory in a processor-readable format. The processor-readable format can include at least one of a numerical computer aided design (CAD) format, computer aided manufacturing (CAM) format, or a computer numerical control (CNC) format. Also, the method can include transmitting the archform layer model, in a processor-readable format, to a computer device using a computer network. The method can also include shaping an archform layer from a biocompatible material responsive to the archform layer model. The archform layer can be custom-shaped to fit to the row of teeth of the pre-identified person. The archform layer can have a first custom-shaped surface and a second surface. The first custom-shaped surface and the second surface can face opposite sides of the archform layer, and/or the archform layer can have a modulation of thickness in a direction substantially along an archform of the archform layer.

In some examples, the shaping of the archform layer can use a 3D printing process, and/or the biocompatible material can include a UV curable resin. The method can also include washing the archform layer, UV curing the archform layer, and/or coating the archform layer. The coating of the archform layer can use a numerical controlled multi-axis robot technology for painting or air brushing. Furthermore, the deriving of the first surface model can include identifying a plurality of first vestibular-facing virtual convex surface areas representing surface areas of crowns of the row of teeth suitable to form a plurality of capillary interfaces with the plurality of concave appliance surfaces models. The deriving of the first surface model can also include identifying virtual undercuts formed by two second vestibular virtual surface areas representing surface areas of crowns of the row of teeth having between them a geometrical angle representing a virtual arc of contact of more than 180°.

In some instances, a method of manufacturing a removable dental appliance includes obtaining a technical specification of the removable dental appliance including an oral-facing surface operational to clip-on to or otherwise be held in place by a plurality of vestibular-facing surfaces of a row of teeth of a pre-identified person. The method can include obtaining imaging data, storable on one or more non-transitory processor-readable memory, representing the row of teeth of the pre-identified person. Furthermore, the method can include updating the technical specification, responsive to the imaging data, to form an updated technical specification. The updated technical specification can include a numerical description of a shape of the removable dental appliance. The method can also include transferring the updated technical specification to a manufacturing system using a rapid prototyping technology operational to shape a workpiece responsive to the numerical description of the removable dental appliance.

In some scenarios, the removable dental appliance can include an archform layer of biocompatible material custom-shaped to fit the row of teeth, the archform layer having a first custom-shaped surface and a second surface. The first custom-shaped surface and the second surface can face opposite sides of the archform layer. Also, the first custom-shaped surface can include a plurality of concave appliance surfaces. A concave appliance surface of the plurality of concave appliance surfaces can correlate with a corresponding vestibular-facing convex crown surface of a plurality of corresponding vestibular-facing convex crown surfaces of the row of teeth. Furthermore, the second surface can include a plurality of convex appliance surfaces, and a convex appliance surface of the plurality of convex appliance surfaces can mimic a corresponding surface of an artificial crown of a plurality of artificial crowns arranged as a row of artificial teeth. Additionally, the removable dental appliance can be shaped to not encase an oral-facing surface of a crown of a tooth included in the row of teeth when the removable dental appliance is engaged with the row of teeth.

In some examples, the archform layer can have a modulation of thickness in a direction substantially along an archform of the archform layer. The modulation of thickness can have at least two local minima of thickness and at least two local maxima of thickness. Moreover, the first custom-shaped surface can include one or more oral-facing surfaces that encase one or more vestibular-facing undercuts of surfaces of a plurality of crowns of the row of teeth when the removable dental appliance is engaged with the row of teeth. Furthermore, the first custom-shaped surface can include two oral-facing surfaces that form a geometrical angle representing an arc of contact of more than 180° between the first custom-shaped surface and two crowns of two teeth of the row of teeth, when the removable dental appliance is engaged with the row of teeth.

Additional aspects, advantages, and/or utilities of the presently disclosed technology are set forth in part in the description that follows and, in part, will be apparent from the description, or may be learned by practice of the presently disclosed technology.

### BRIEF DESCRIPTION OF THE DRAWINGS

So that the manner in which the features, advantages, and objects of the technology, as well as others which will become apparent, are attained, and can be understood in more detail, more particular description of the technology briefly summarized above may be had by reference to the embodiments thereof which are illustrated in the appended drawings that form a part of this specification. It is to be noted, however, that the drawings illustrate only certain embodiments of the disclosed technology and are therefore not to be considered limiting of its scope as the disclosed technology may admit to other equally effective embodiments.
FIG. **1** shows an illustration of a perspective view of an exemplary person's upper jaw and an exemplary embodiment of a multi-unit veneer for the upper jaw, in accordance with one or more embodiments of the presently disclosed technology, which are combinable with any other embodiment disclosed herein.

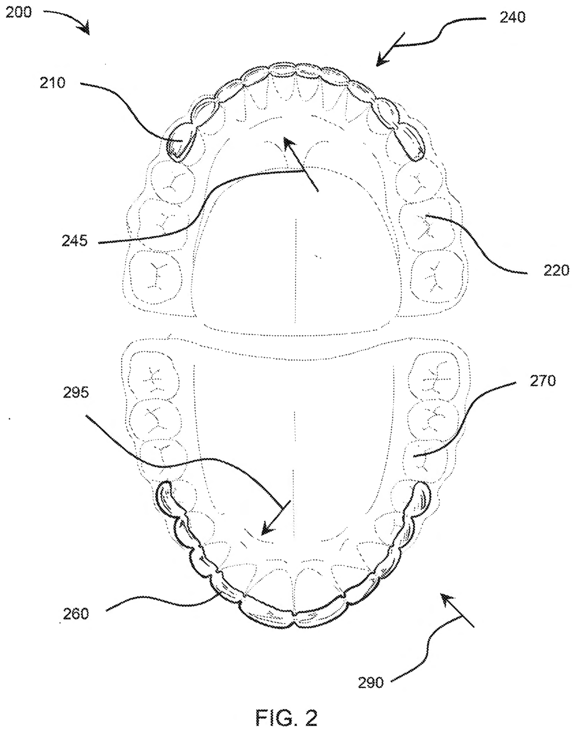

FIG. **2** shows an illustration of an occlusal view of an exemplary person's upper and lower jaw and two corresponding exemplary embodiments of multi-unit veneers operationally inserted, in accordance with one or more embodiments of the presently disclosed technology, which are combinable with any other embodiment disclosed herein.

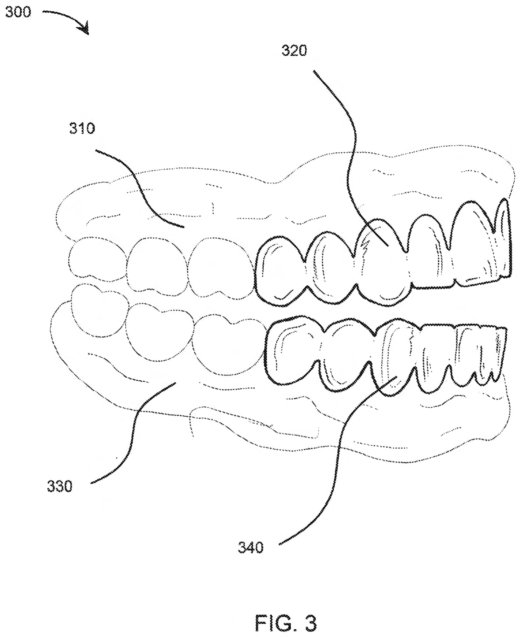

FIG. **3** shows an illustration of a side view of an exemplary upper and an exemplary lower jaw of a dental patient or customer and two corresponding exemplary embodiments of multi-unit veneers operationally inserted, in accordance with one or more embodiments of the presently disclosed technology, which are combinable with any other embodiment disclosed herein.

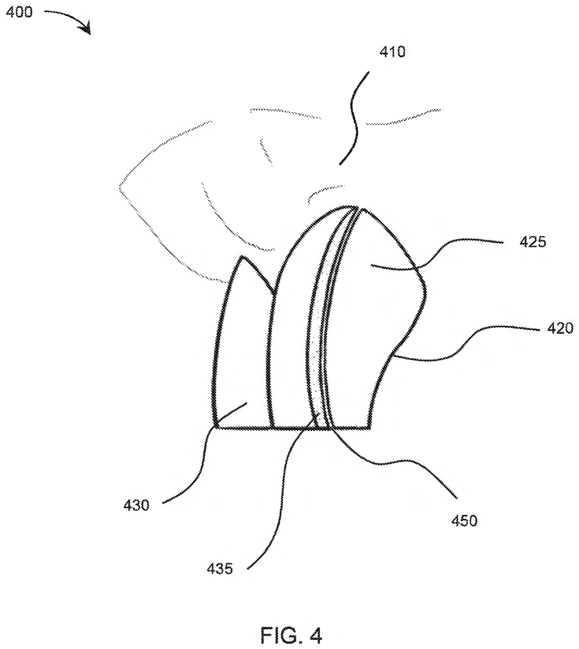

FIG. **4** shows an illustration of a cross-sectional side view of an exemplary upper jaw of a dental patient or customer and a corresponding exemplary embodiment of a multi-unit veneer operationally inserted, in accordance with one or more embodiments of the presently disclosed technology, which are combinable with any other embodiment disclosed herein.

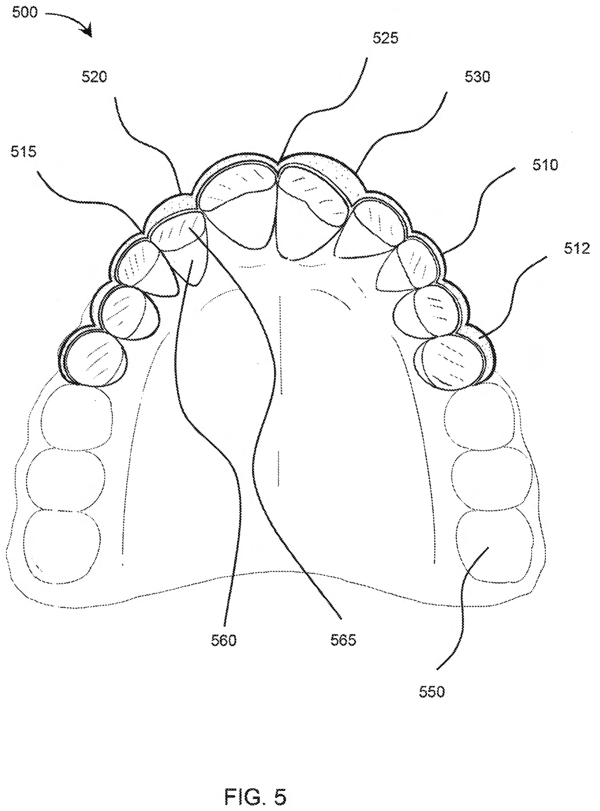

FIG. **5** shows an illustration of a cross-sectional occlusal view of an exemplary upper jaw of a dental patient or customer and a corresponding exemplary embodiment of a multi-unit veneer operationally inserted, in accordance with one or more embodiments of the presently disclosed technology, which are combinable with any other embodiment disclosed herein.

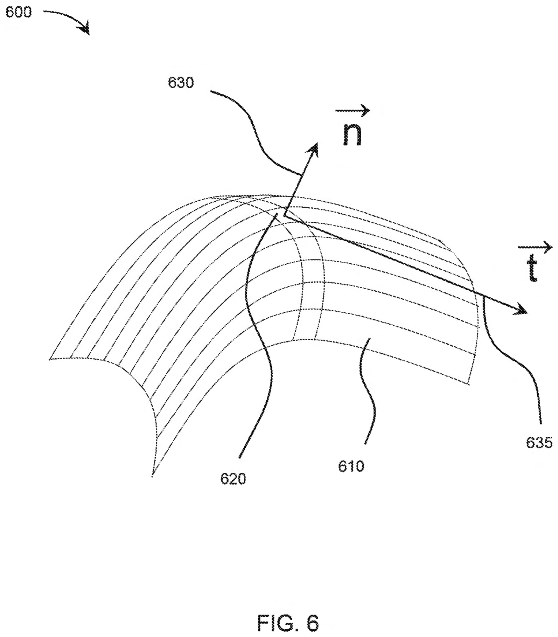

FIG. **6** shows a schematic illustration of an exemplary surface of a tooth of a dental patient or customer or of an exemplary surface of a multi-unit veneer, in accordance with one or more embodiments of the presently disclosed technology, which are combinable with any other embodiment disclosed herein.

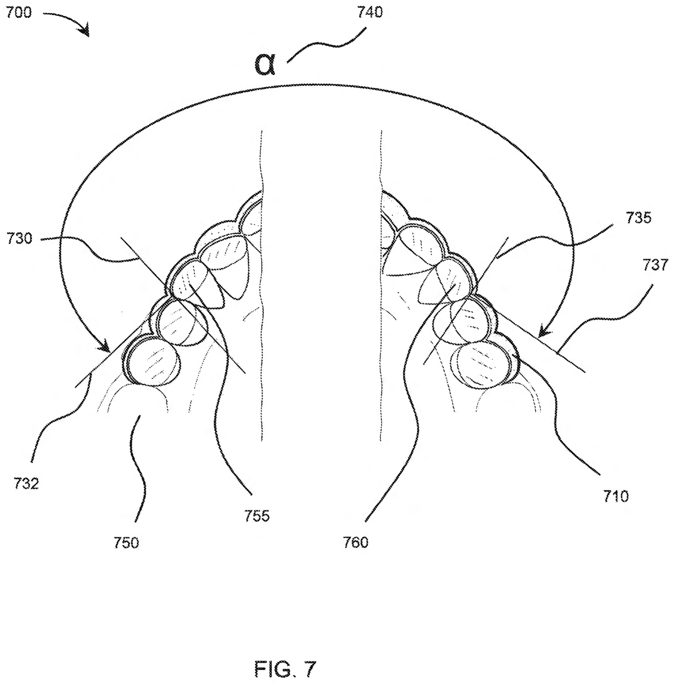

FIG. **7** shows a schematic illustration of the cross-sectional occlusal view of an exemplary upper jaw of a dental patient or customer and a corresponding exemplary embodiment of a multi-unit veneer operationally inserted, as shown in FIG. **5**, in accordance with one or more embodiments of the presently disclosed technology, which are combinable with any other embodiment disclosed herein.

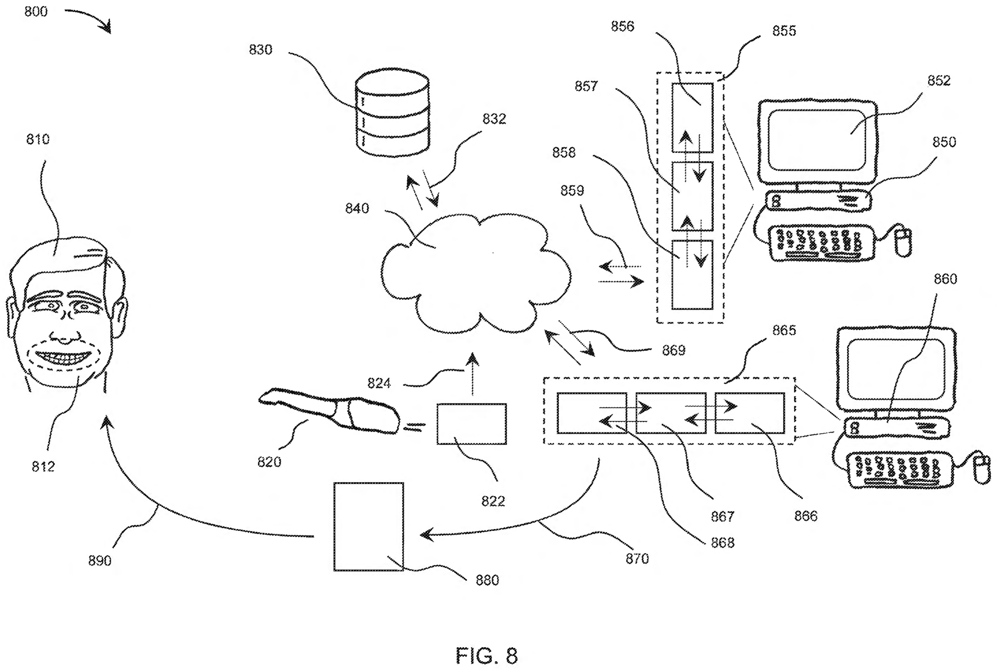

FIG. **8** shows a schematic block diagram illustrating an exemplary embodiment of the ordering and manufacturing process and related information technology (IT) and other systems components and method steps in accordance with one or more embodiments of the presently disclosed technology, which are combinable with any other embodiment disclosed herein.

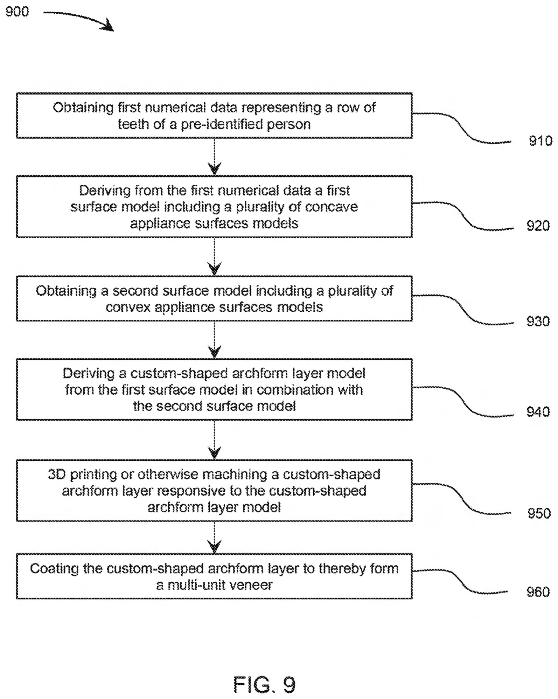

FIG. **9** shows an illustration of an exemplary embodiment of a flow diagram for a plurality of method steps for manufacturing a removable dental appliance in accordance with one or more embodiments of the presently disclosed technology which are combinable with any other embodiment disclosed herein.

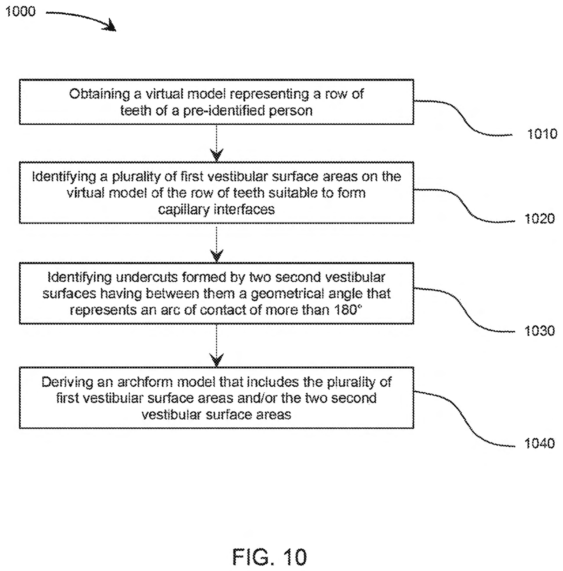

FIG. **10** shows an illustration of an exemplary embodiment of a flow diagram for a plurality of method steps for deriving, combining, or modifying a design of a removable dental appliance in accordance with one or more embodiments of the presently disclosed technology which are combinable with any other embodiment disclosed herein.

It should be noted that the first digit of a three-number numeral representing an element in the drawings refers to the number of the respective FIGS. **1** to **9**, and that the first two digits of a four-number numeral representing an element in the drawings refers to the number of the respective FIG. **10**.

### DETAILED DESCRIPTION

The presently disclosed technology will now be described more fully hereinafter with reference to the accompanying drawings, which illustrate embodiments of the presently disclosed technology. This technology may, however, be embodied in many different forms and should not be construed as limited to the illustrated embodiments set forth herein. Rather, these embodiments are provided so that this disclosure will be thorough and complete, and will fully convey the scope of the presently disclosed technology to those persons skilled in the art. Like numbers refer to like elements throughout. The different numbering of identical or similar components and/or prime notation, if used, indicates similar elements in different embodiments and/or configurations.

The system(s) and method(s) provided by the various embodiments of the present technology comprise several independent novel and nonobvious features providing substantial improvements. The greatest benefit can be achieved in the field of removable dental appliances, including but not limited to, multi-unit veneers and the computer-aided design and manufacturing of such removable dental appliances.

One or more of the objects and/or features described in this, the preceding, and the following paragraph(s) may be combined in any combination, in any partial combination, and in no or in any order. One or more of the method, process and/or function steps described in this, the preceding and the following paragraph(s) may be combined in any combination, in any partial combination, and in no or in any order. One or more of the objects described in this, the preceding and the following paragraph(s) may be configured to carry out one or more of the method, process and/or function steps disclosed in this, the preceding and the following paragraph(s) in any combination, in any partial combination, and in no or in any order.

As discussed in greater detail below, dental appliances can include medical devices and/or cosmetic devices. In some examples, techniques disclosed herein include the individual adaptation and customization of a shape or shapes of materials and medical devices and/or cosmetic devices to fit the anatomical shape or shapes of the dentition or a row of teeth the dental patient or the dental customer presents. Laboratories and industrial manufacturers may receive physical dental impressions, bite registrations, or clinical imaging data representing, for example, a shape of a patient's specific anatomy of the dental patient's or dental customer's dentition and may design and may manufacture custom-shaped medical and/or cosmetic devices responsive to the anatomical shapes represented in the dental impression and/or in the imaging data, so that, for example, a shape of a medical device and/or cosmetic device corresponds specifically to a shape of the patient's or customer's anatomy.

Furthermore, custom-shaped multi-unit veneers may be designed by interactive or automatic CAD/CAM computer program products and manufactured by CNC machinery, including 3D printing. CAD is an abbreviation for computer aided design, CAM is an abbreviation for computer aided manufacturing, and CNC is an abbreviation for computerized numerical control.

FIG. **1** shows an illustration of a perspective view **100** of an exemplary person's upper jaw **110** and an exemplary embodiment of a multi-unit veneer **120** for the upper jaw **110**, in accordance with one or more embodiments of the presently disclosed technology, which are combinable with any other embodiment disclosed herein.

In one or more exemplary embodiments of the present technology, unless the context requires otherwise, combinable with any other embodiment disclosed herein, a removable dental appliance **120**, for example, a multi-unit veneer **120**, including a plurality of convex surfaces **125**, is custom-shaped to fit a row of teeth **115**, for example, of an upper jaw or a lower jaw **110** of a dental patient or customer. The multi-unit veneer **120** may comprise a layer of biocompatible material that extends from a rights side to a left side of a respective jaw **110**. The multi-unit veneer **120** may cover or mask the row of teeth **115** that the dental patient or customer presents to enhance the aesthetics and function of a smile of the dental patient or customer. The biocompatible material may include, for example, a plastic material, for example a resin-based composite, or a ceramic material.

The row of teeth **115** may include right and left central and lateral incisors, right and left canines, right and left first and second premolars, and right and left first and second molars of the dental patient or customer, or any subset of these teeth. The row of teeth **115** may be crowded or maloccluded. One or more teeth of the row of teeth **115** may be aesthetically compromised. The multi-unit veneer **120** may be shaped, colored, structured, and/or otherwise configured to enhance the aesthetics and/or function of a smile of the dental patient or customer, covering or masking, for example, maloccluded or mal-positioned tooth arrangement of the patient's or dental customer's row of teeth **115,** with, for example, a shape of the multi-unit veneer, having an appearance as an aesthetically aligned tooth arrangement. The plurality of convex surfaces **125** of the multi-unit veneer **120** may be shaped to mimic individual teeth that are, for example, straight, nicely formed, aligned, and not aesthetically compromised. The muti-unit veneer **120** may be coated. The removable dental appliance **120**, for example, the multi-unit veneer **120**, may be designed and made to enhance the aesthetic appearance of the person's row of teeth **115,** the person's row of teeth **115** including a plurality of teeth of the person's jaw **110**.

The dental appliance **120** may comprise a custom-shaped archform layer of biocompatible material having a first surface, and a second surface, the first surface and the second surface are facing predominately opposite sides of a custom-shaped archform layer, the first surface includes a plurality of concave appliance surfaces, each concave appliance surface of the plurality of concave appliance surfaces being operable to form a capillary interface with a corresponding convex tooth surface of a corresponding tooth of the plurality of teeth **115** to thereby define a plurality of capillary interfaces. Each such capillary interface of the plurality of capillary interfaces may be operable to create a capillary adhesive force between each concave appliance surface of the plurality of concave appliance surfaces and the corresponding convex tooth surface of a corresponding tooth of the plurality of teeth when the removable dental appliance **120** is operationally placed in close proximity of the person's row of teeth **115** and when saliva or a fixative cream is present to form a capillary bridge within each capillary interface of the plurality of capillary interfaces to thereby define a plurality of capillary adhesive forces. In this context, the removable dental appliance **120** may be predominately held in position by the plurality of capillary adhesive forces, when operationally placed adjacent the person's row of teeth **115**.

Alternatively, the removable dental appliance **120** may be predominately held in position by a removable form-lock mechanism when operationally placed adjacent and engaged with the person's row of teeth **115**. Said removable form-lock may be formed by an angle of contact, also referred to as an angle or arc of wrap, between two or more surface portions of the removable dental appliance **120** having a contact angle, also herein referred to as an arc of contact, between them of more than 180° in combination with correlating vestibular-facing surface portions of one or more teeth the row or teeth **115**. The process of engaging the removable dental appliance **120** with the row of teeth **115** may include a process, where the removable dental appliance **120** is elastically deformed, in other words, opened, when pushed over corresponding vestibular-facing surfaces of the teeth of the row of teeth **115**. The removable dental appliance **120** may spring back elastically, so that the respective surfaces of the removable dental appliance **120** engage with the corresponding vestibular-facing surfaces of the teeth of the row of teeth **115** forming an undercut and providing thereby a form-lock. Both mechanisms to hold the removable dental appliance **120** in place adjacent the person's row of teeth **115**, the mechanism based on a plurality of capillary forces, and the form-lock mechanism based on a vestibular arc of contact of more than 180°, may be combined.

In this context and throughout this disclosure, the term "veneer", and derivative or similar words shall be understood as being generic to all possible meanings supported by the specification and by the words itself; the meaning shall, however, include herein, without limiting the foregoing and unless the context requires otherwise, a layer of material covering one tooth or a plurality of teeth of a dental patient or customer to protect, enhance function and/or improve the aesthetic appearance of the one tooth or the plurality of teeth. Veneers are not intended to orthodontically move teeth of such customer or patient.

In this context and throughout this disclosure, the term "multi-unit veneer", and derivative or similar words shall be understood as being generic to all possible meanings supported by the specification and by the words itself; the meaning shall, however, include herein, without limiting the foregoing and unless the context requires otherwise, a veneer covering at least two adjacent or distantly positioned teeth of the dental customer or patient. Removable multi-unit veneers are indented to be inserted and removed by the dental patient or customer himself or herself. Removable multi-unit veneers are not intended to be permanently affixed to the teeth of the dental patient or customer, for example, by cementation using dental composites, cements or adhesives. Multi-unit veneers are not intended to orthodontically move teeth of such customer or patient.

In this context and throughout this disclosure, the term "surface tension and capillary action", and derivative or similar words shall be understood as being generic to all possible meanings supported by the specification and by the words itself; the meaning shall, however, include herein, without limiting the foregoing and unless the context requires otherwise, the intermolecular forces between solid surfaces and a liquid. Intermolecular forces include cohesive forces within the liquid and adhesive forces between the liquid and a solid surface.

In this context and throughout this disclosure, the term "capillary adhesion", and derivative or similar words shall be understood as being generic to all possible meanings supported by the specification and by the words itself; the meaning shall, however, include herein, without limiting the foregoing and unless the context requires otherwise, a force that holds two solid surfaces together by means of a liquid that wets the surfaces and forms a capillary bridge in the gap between the surfaces. The capillary action in this context creates a capillary pressure, where the curvature of the liquid meniscus in the gap between the two adjacent surfaces creates a pressure difference across the liquid surface, and this difference exerts a pulling force that acts to draw and/or keep the two surfaces together. The surfaces can be flat or one- or two-dimensionally curved having a spatial extension.

In one or more exemplary embodiments of the present technology, unless the context requires otherwise, combinable with any other embodiment disclosed herein, a removable, custom-made, multi-unit veneer **120** is produced individually, based on a dental impression, precisely fitting and tailor-made for a pre-identified person. The veneer is, for example, attached without any fixing material and only sits on the front of the teeth **115**, minimally encases the incisal edge of the teeth **115,** lies directly on the teeth **115** without a cement or adhesive material. The veneer **120** may go into the gaps between the teeth **115** to provide support. This functional design, for example, covers the real teeth **115** in the visible front area and leaves the inside of the mouth unrestricted. With other words, the multi-unit veneer may not encase oral-facing surfaces of the row of teeth **115.** As the oral environment, including the teeth **115** are generally moist, the veneer **120** may rest directly on the teeth **115,** creating a capillary suction, or capillary adhesion, that pulls the veneer **120** firmly against the teeth **115.** This may create a very good hold without the need for fixing material. The multi-unit veneer **120** may reproduce 8 to 10 artificial teeth **125**. If a person has missing teeth, crooked teeth **115,** teeth **115** of different sizes or gaps between teeth **115,** the multi-unit veneer **120** may compensate for these imperfections with additional veneer material. The custom-made multi-unit veneer **120** may be produced with a thickness of 0.2 mm at the thinnest point. The material may be flexible and may include biocompatible synthetic resin. The basic structure of the multi-unit veneer **120**, also referred to as a archform layer, may be 3D printed. The printing material may include plastic material, for example, ethoxylated bisphenol A dimethacrylate, 7,7,9(or 7,9,9)-trimethyl-4,13-dioxo-3,14-dioxa-5,12-diazahexadecane-1,16-diyl bismethacrylate, 2-propenoic acid, (5-ethyl-1,3-dioxan-5-yl)methyl ester, isopropylidenediphenol peg-2 dimethacrylate, (octahydro-4,7-methano-1H-indenyl)methyl acrylate, hydroxy propyl methacrylate, ethyl phenyl(2,4,6-trimethylbenzoyl)phosphinate, 2-hydroxyethyl methacrylate, and/or phenyl bis(2,4,6-trimethylbenzoyl)-phosphine oxide, or any combination thereof. The printing material may be branded as Veneeraprint flex, made or distributed, for example, by DETAX GmbH, Ettlingen, Germany. The multi-unit veneer **120** may be coated. The coating material may comprise plastic material, for example, a gelcoat. The plastic material utilized for coating may include, for example, isopropylidenediphenol peg dimethacrylate, isopropylidenediphenol peg-2 dimethacrylate, methyl 2-methylprop-2-enoate, methyl 2-methylpropenoate, methyl methacrylate (MMA), urethane dimenthacrylate, hydroxy propyl methacrylate, ethyl phenyl(2,4,6-trimethylbenzoyl)phosphinate, and/or 2-hydroxyethyl methacrylate, or any combination thereof. The coating material may be branded as Veneeracoat flex, made or distributed, for example, by DETAX GmbH, Ettlingen, Germany.

In one or more exemplary embodiments of the present technology, unless the context requires otherwise, combinable with any other embodiment disclosed herein, a removable, custom-made, multi-unit veneer **120** is produced, for example, using the following workflow. First, for example, performing a 3D scan, digitizing a dental impression, from which a negative image of the dentition of a pre-identified patient scanned. This scan may be rendered from negative to positive in order to obtain the exact image of the tooth situation, a digital denture model. Second, for example, performing digital construction and design based on the digital denture model, the multi-unit veneer **120** is digitally constructed and designed to match the tooth situation **115.** After the construction, a design may be created that can be printed with the 3D printer. Third, for example, 3D printing or shaping, and clean-up is performed, where the digitally created multi-unit veneer design is printed with a biocompatible plastic material, such as UV curable resin, and, for example, light-cured. The 3D printer is, for example, branded as a FORM 3B printer, made or distributed by the company Formlabs, Somerville, Massachusetts, United States. The shaping of the archform layer of the multi-unit veneer **120** may include a process of subtractive shaping, a process of additive shaping, a process of shape-forming, and/or a rapid prototyping process. Fourth, cleaning and pre-curing is performed, where after printing, the physically fabricated archform layer of the multi-unit veneer **120** is cleaned, for example, in 99% alcohol in an ultrasonic enforced bath, for example, 2-times for 2 minutes to remove excess resin. The washing may be performed utilizing, for example, a device branded as Form Wash, made or distributed by the company Formlabs, Somerville, Massachusetts, United States.

After cleaning, the fabricated archform layer of the multi-unit veneer **120** may be precured under UV light. The curing may be performed utilizing a flash-light polymerization device branded as Otoflash G171, made or distributed by the company VOCO GmbH, Cuxhaven, Germany, utilizing, for example, 400 UV flashes per minute. The curing may be performed utilizing a device branded as Fast Cure, made or distributed by the company Formlabs, Somerville, Massachusetts, United States. Fifth, finishing is performed, where the archform layer of the multi-unit veneer **120** may be manually detached from the support structure of the 3D print. The surface of the printed archform layer of the multi-unit veneer **120** may be sanded smoothly so that the surface structure resulting from the 3D printer is no longer visible. The archform layer of the multi-unit veneer **120** may be then cleaned of dust with water in an ultrasonic enforced bath, for example, for 2 minutes. The archform layer of the multi-unit veneer **120** may be then blown dry with air pressure. The archform layer of the multi-unit veneer **120** may be coated on the outside, for example, with a biocompatible clear varnish, very thinly, for example, by a paint-on method, for example, by hand using a micro-bush. Sixth, for example, final curing is performed, where after finishing, the varnished multi-unit veneer **120** is finally cured with UV light, for example, under nitrogen. This may be performed using the Otoflash G171 device, for example, with 1000 flashes per minute. In this step, for example, the varnish may be drying, and the last toxic components may be expelled from the material so that the custom-made multi-unit veneer **120** may become biocompatible.

In one or more exemplary embodiments of the present technology, unless the context requires otherwise, combinable with any other embodiment disclosed herein, a removable dental appliance, for example, a custom-made, multi-unit veneer **120** comprises a archform layer, which may be 3D printed. The archform layer may be monolithic and made from a single material, or may include two or more layers of, for example, different materials. The archform layer may be solid or porous, for example, made like a scaffold. The archform layer may be coated. The archform layer, for example, including a scaffold may be infiltrated with a second type of plastic material, to enhance, for example, the elasticity and/or structural integrity of the archform layer. In this context the infiltration may utilize, for example, a liquid resin, vacuum or pressure, and a heating and/or light curing process. The elasticity of the archform layer may be required to enable a clip-on effect, allowing the finished multi-unit veneer **120** reaching into vestibular facing undercuts the row of teeth 115 may present.

The multi-unit veneer **120** may comprise a layer of a biocompatible material, also refereed herein as a archform layer extending over a plurality of tooth positions covering an anterior portion of vestibular-facing surfaces of the row of teeth **115**. The geometrical dimension of the length of the multi-unit veneer **120** along an arch, for example, following an average gumline of the row of teeth **115** may vary, for example, between 20 and 70 millimeter. The geometrical dimension of the height of the multi-unit veneer **120** in an average apical-occlusal direction of each tooth of the row of teeth **115,** may vary along the length of the multi-unit veneer **120**, for example, between 4 and 10 millimeter. The geometrical dimension of the thickness of the multi-unit veneer **120** along its length mainly in oral-vestibular direction of each tooth of the row of teeth **115,** may vary along the length of the multi-unit veneer **120**, for example, between 0.2 to 5 millimeter. A geometrical envelope in cartesian coordinates of the multi-unit veneer **120** may extend to a box, for example, of up to 60 millimeter times 30 millimeter times 12 millimeter. The archform layer of biocompatible material may form substantially the close to net-shape and extension of the multi-unit veneer **120**. The biocompatible material may include, for example, ceramic materials, for example, silicon nitride, zirconia, alumina, alumina toughed zirconia (ATZ), or zirconia toughed alumina (ZTA). The biocompatible material may include, for example, synthetic or semisynthetic materials, or plastic material, for example, polymers, resin, composites, and/or fiber reinforced material.

In this context and throughout this disclosure, the term "plastic material", or "plastic", and derivative or similar words shall be understood as being generic to all possible meanings supported by the specification and by the words itself; the meaning shall, however, include herein, without limiting the foregoing and unless the context requires otherwise, any synthetic or semisynthetic material, elastics, plastics, resin-modified glass-ionomer cement, hybrid-ionomer cement, resin-enforced cement, fiber reinforced material, fiberglass material, acrylic material, composite resins, elastomeric material, acrylonitrile butadiene styrene (ABS), polyurethane ether ketone (PEEK), polymethylmethacrylate (PMMA), acrylics, polyesters, silicones, polyurethanes, halogenated plastics, epoxy, vinyl ester, polyester thermosetting plastic, and/or phenol formaldehyde resins, or any combination thereof. A polymer matrix may be reinforced with fibers made from, for example, glass, carbon, aramid, or basalt.

Without limiting the foregoing and unless the context requires otherwise, all features or other elements as disclosed herein with respect to FIG. **1** shall be deemed herewith disclosed in any combination with each other, in any partial combination with each other, and in any order; and shall be deemed herewith disclosed in combination with all features or other elements as disclosed herein with respect to FIGS. **2** to **10** in any combination, in any partial combination, and in any order. Without limiting the foregoing and unless the context requires otherwise, the removable dental appliance **120**, and the multi-unit veneer **120** referenced with respect to FIG. **1** may represent the same or similar removable dental appliance, e.g., **210**, **260**, **320**, **340**, **430**, **510**, **610**, **710**, or **890**, the same or similar multi-unit veneer, e.g., **210**, **260**, **320**, **340**, **430**, **510**, **610**, **710**, or **890**, or the same or similar like elements, respectively, as shown in and/or described with respect to FIGS. **2** to **10**, and other figures herein, respectively, and vice versa.

Without limiting the foregoing and unless the context requires otherwise, the upper jaw or lower jaw **110**, the row of teeth **115**, the exemplary tooth **115**, the plurality of convex surfaces 125, the exemplary convex surface **125**, and derivative terms thereof, referenced with respect to FIG. **1** may represent the same or similar upper jaw or lower jaw, e.g., **220**, **270**, **310**, **330**, **410**, **550, 750,** or **812,** the same or similar row of teeth, e.g., **220**, **270**, **550**, **750**, or **812,** the same or similar exemplary tooth, e.g., **420**, **610**, **560**, **755**, or **760**, the same or similar plurality of convex surfaces, e.g., **320**, **340**, or **430**, the same or similar exemplary convex surface, e.g., **320**, **340**, or, **430**, or the same or similar like elements, respectively, as shown in and/or described with respect to FIGS. **2** to **10**, and other figures herein, respectively, and vice versa.

Without limiting the foregoing and unless the context requires otherwise, the biocompatible material, the first surface, the second surface, the central and lateral incisors, the canines, the first and second premolars, the first and second molars, the capillary interface, the surface tension, the capillary action, the capillary adhesion, the elastic deformation, the archform layer, the workflow, the dental impression, the various materials, and derivative terms thereof, as each referenced with respect to FIG. **1** may represent, the same or similar biocompatible material, the same or similar first surface, the same or similar second surface, the same or similar central and lateral incisors, the same or similar canines, the same or similar first and second premolars, the same or similar first and second molars, the same or similar capillary interface, the same or similar surface tension, the same or similar capillary action, the same or similar capillary adhesion, the same or similar elastic deformation, the same or similar archform layer, the same or similar workflow, the same or similar dental impression, the same or similar various materials, or the same or similar like elements, respectively, as described and/or shown with respect to FIGS. **2** to **10****,** and other figures herein, respectively, and vice versa.

Without limiting the foregoing and unless the context requires otherwise, the manufacturing process, the various method steps, including, for example, the 3D printing, the machining, the shaping, the digitizing, the shape forming, the rapid prototyping, the cleaning, the coating, the design, the clip-on mechanism, the various elements of a manufacturing system, and derivative terms thereof, referenced with respect to FIG. **1** may represent the same or similar manufacturing process, e.g., **800**, **900**, or **1000**, the same or similar various method steps, e.g., **910, 920, 930, 940, 950, 960, 1010, 1020, 1030, or 1040,** including, for example, the same or similar 3D printing, the same or similar machining, the same or similar shaping, the same or similar digitizing, the same or similar shape forming, the same or similar rapid prototyping, the same or similar cleaning, the same or similar coating, the same or similar design, the same or similar clip-on mechanism, the same or similar various elements of a manufacturing system, e.g., **820**, **822**, **824**, **830**, **832**, **840**, **852**, **850**, **855**, **856**, **857**, **858**, **859**, **860**, **865**, **866**, **867**, **868**, **869**, **870**, or **880**, or the same or similar like elements, respectively, as described and/or shown with respect to FIGS. **2** to **10**, and other figures herein, respectively, and vice versa.

FIG. **2** shows an illustration of an occlusal view **200** of an exemplary person's upper and lower jaw **220**, and **270**, and two corresponding exemplary embodiments of removable dental appliances **210**, and **260**, for example, multi-unit veneers **210**, and **260**, each operationally inserted, in accordance with one or more embodiments of the presently disclosed technology, which are, unless the context requires otherwise, combinable with any other embodiment disclosed herein. The arrow **240** indicates a vestibular, for example, a buccal or labial view, to the outside-facing, for example, vestibular-, buccal- or labial-facing surfaces of the row of teeth **220,** and to the outside-facing, for example, vestibular-, buccal- or labial-facing surfaces of the removable dental appliances **210,** for example, the multi-unit veneer **210**. The arrow **245** indicates an oral, for example, a lingual view, to the inside-facing, for example, oral- or lingual-facing surfaces of the row of teeth **220**, and to the inside-facing, for example, oral- or lingual-facing surfaces of the removable dental appliances **210**, for example, the multi-unit veneer **210**. The arrow **290** indicates a vestibular, for example, a buccal or labial view, to the outside-facing, for example, vestibular-, buccal- or labial-facing surfaces of the row of teeth **270**, and to the outside-facing, for example, vestibular-, buccal- or labial-facing surfaces of the removable dental appliances **260,** for example, the multi-unit veneer **260**. The arrow **295** indicates an oral, for example, a palatal view, to the inside-facing, for example, oral- or palatal-facing surfaces of the row of teeth **220,** and to the inside-facing, for example, oral- or palatal-facing surfaces of the removable dental appliances **210,** for example, the multi-unit veneer **210**.

The placement of the removable dental appliance **210,** or **260,** for example, the multi-unit veneer **210**, or **260**, onto the exemplary person's corresponding upper or and lower jaw **220**, or **270**, may use the elastic deformation of the removable dental appliance **210,** or **260,** for example, the multi-unit veneer **210,** or **260,** to clip-on to the corresponding teeth of the row of teeth **220** or **270.** Once seated, or operationally placed, each removable dental appliance **210**, or **260**, for example, each multi-unit veneer **210**, or **260** may be held in position by at least one of the following mechanisms. When operationally placed, the inside surface of the veneer **210**, or **260** may be configured and custom-shaped to form with the outside surfaces of the corresponding teeth of the respective row of teeth **220**, or **270** a partially of capillary interfaces, so that, when, for example saliva is present, these interfaces present capillary bridges providing capillary adhesive forces to hold the veneer **210,** or **260** operationally in position. When operationally placed, the inside surface of the veneer **210,** or **260** may be configured and custom-shaped to form with the outside-facing surfaces of the corresponding teeth of the respective row of teeth **220**, or **270** a form-lock fit, utilizing at least one vestibular-facing undercut presented by the vestibular-facing surfaces of the row of teeth **220**, or **270** so that the clip-on mechanism utilizing the form-lock fit to provide the forces to hold the veneer **210,** or **260** operationally in position. In this context and throughout this disclosure, the term "undercut", and derivative or similar words shall be understood as being generic to all possible meanings supported by the specification and by the words itself; the meaning shall, however, include herein, without limiting the foregoing and unless the context requires otherwise, a recessed surface, or a combination of more than one recessed surfaces, that are present itself when a body, for example, a dental object, is viewed from a certain viewpoint, or when a body, for example, a dental object, is approached from or a certain direction, for example, following an insertion or engagement path, or a disengagement path.

Without limiting the foregoing and unless the context requires otherwise, all features or other elements as disclosed herein with respect to FIG. **2** shall be deemed herewith disclosed in any combination with each other, in any partial combination with each other, and in any order; and shall be deemed herewith disclosed in combination with all features or other elements as disclosed herein with respect to FIGS. **1**, and **3** to **10** in any combination, in any partial combination, and in any order. Without limiting the foregoing and unless the context requires otherwise, the removable dental appliance **210**, and **260**, and the multi-unit veneer **210**, and **260** referenced with respect to FIG. **2** may represent the same or similar removable dental appliance, e.g., **120**, **320**, **340**, **430**, **510**, **610**, **710**, or **890**, the same or similar multi-unit veneer, e.g., **120**, **320**, **340**, **430**, **510**, **610**, **710**, or **890**, or the same or similar like elements, respectively, as shown in and/or described with respect to FIGS. **1**, and **3** to **10**, and other figures herein, respectively, and vice versa.

Without limiting the foregoing and unless the context requires otherwise, the upper jaw or lower jaw **220**, or **270**, the row of teeth **220**, or **270**, and each exemplary tooth **220**, or **270** referenced with respect to FIG. **2** may represent the same or similar upper jaw or lower jaw, e.g., **110**, **310**, **330**, **410**, **550**, **750**, or **812**, the same or similar row of teeth, e.g., **115**, **550**, **750**, or **812**, the same or similar exemplary tooth, e.g., **115**, **420**, **610**, **560**, **755**, or **760**, or the same or similar like elements, respectively, as shown in and/or described with respect to FIGS. **1**, and **3** to **10,** and other figures herein, respectively, and vice versa.

Without limiting the foregoing and unless the context requires otherwise, the elastic deformation, the vestibular-, buccal-, labial-, oral-, lingual-, and palatal-facing surfaces, the mechanisms, the capillary interfaces, the capillary bridges, the capillary adhesive forces, the form-lock fit, the vestibular-facing undercut, and derivative terms thereof, as each referenced with respect to FIG. **2** may represent, the same or similar elastic deformation, the same or similar vestibular-, buccal-, labial-, oral-, lingual-, and palatal-facing surfaces, the same or similar mechanisms, the same or similar capillary interfaces, the same or similar capillary bridges, the same or similar capillary adhesive forces, the same or similar form-lock fit, the same or similar vestibular-facing undercut, or the same or similar like elements, respectively, as described and/or shown with respect to FIGS. **1**, and **3** to **10**, and other figures herein, respectively, and vice versa.

FIG. **3** shows an illustration of a side or vestibular view **300** of an exemplary upper jaw **310** and an of an exemplary lower jaw **330** of a dental patient or customer and two corresponding exemplary embodiments of multi-unit veneers **320**, and **340** operationally inserted, in accordance with one or more embodiments of the presently disclosed technology, which are combinable with any other embodiment disclosed herein.

Without limiting the foregoing and unless the context requires otherwise, all features or other elements as disclosed herein with respect to FIG. **3** shall be deemed herewith disclosed in any combination with each other, in any partial combination with each other, and in any order; and shall be deemed herewith disclosed in combination with all features or other elements as disclosed herein with respect to FIGS. **1** to **2**, and **4** to **10** in any combination, in any partial combination, and in any order.

Without limiting the foregoing and unless the context requires otherwise, the removable dental appliance **320**, and **340**, and the multi-unit veneer **210**, and **260** referenced with respect to FIG. **3** may represent the same or similar removable dental appliance, e.g., **120**, **210**, **260**, **430**, **510**, **610**, **710**, or **890**, the same or similar multi-unit veneer, e.g., **120**, **210**, **260**, **430**, **510**, **610**, **710**, or **890**, or the same or similar like elements, respectively, as shown in and/or described with respect to FIGS. **1**, **2**, and **4** to **10**, and other figures herein, respectively, and vice versa. Without limiting the foregoing and unless the context requires otherwise, the upper jaw or lower jaw **310**, and **330**, referenced with respect to FIG. **3** may represent the same or similar upper jaw or lower jaw, e.g., **110**, **220**, or **270**, **410**, **550**, **750**, or **812**, or the same or similar like elements, respectively, as shown in and/or described with respect to FIGS. **1**, **2**, and **3** to **10**, and other figures herein, respectively, and vice versa.

FIG. **4** shows an illustration of a cross-sectional side view **400** of an exemplary upper jaw **410** of a dental patient or customer and a corresponding exemplary embodiment of removable dental appliance **430**, for example, a multi-unit veneer **430** operationally inserted, in accordance with one or more embodiments of the presently disclosed technology, which are, unless the context requires otherwise, combinable with any other embodiment disclosed herein. The cross-sectional artificial surface **425** of the tooth **420** illustrates an exemplary cross-sectional profile **425** of the tooth **420.** The cross-sectional artificial surface **435** of the multi-unit veneer **430** illustrates an exemplary cross-sectional thickness profile **435** of the multi-unit veneer **430**. The gap **450** shows an exemplary capillary interface between a vestibular-facing surface of the tooth **420** and the oral-facing surface of the multi-unit veneer **430**.

In one or more exemplary embodiments of the present technology, unless the context requires otherwise, combinable with any other embodiment disclosed herein, a removable dental appliance, for example, a multi-unit veneer **430** is designed, configured, and/or custom-shaped to fit a row of teeth of a person's jaw **410** so that a plurality of capillary interfaces is formed when the multi-unit veneer **430** is operationally placed adjacent row of teeth of a person's jaw **410**. Each such capillary interface of the plurality of capillary may include a concave oral-facing surface of the multi-unit veneer **430** and a corresponding convex vestibular-facing surface of a crown of a tooth of the row of teeth of a person's jaw **410**. Each such capillary interface may be three-dimensionally curved or shaped, providing a gap with a dimensional distance between the oral-facing convex surface of the multi-unit veneer **430** and the vestibular-facing concave surface of the correlating crown. Said dimensional distance of the gap **450** may vary between 10 and 300 micrometer. In the presence of saliva filling teach such gap, each capillary interface may provide a plurality of capillary adhesive forces may hold the surfaces forming each such capillary interface together in close proximity. The plurality of these adhesive forces may hold the multi-unit veneer **430** operationally in position adjacent the row of teeth of a person's jaw **410** when operationally placed under the presence of saliva and/or with a fixative cream.

Without limiting the foregoing and unless the context requires otherwise, all features or other elements as disclosed herein with respect to FIG. **4** shall be deemed herewith disclosed in any combination with each other, in any partial combination with each other, and in any order; and shall be deemed herewith disclosed in combination with all features or other elements as disclosed herein with respect to FIGS. **1** to **3**, and **5** to **10** in any combination, in any partial combination, and in any order.

Without limiting the foregoing and unless the context requires otherwise, the removable dental appliance **430,** and the multi-unit veneer **430** referenced with respect to FIG. **4** may represent the same or similar removable dental appliance, e.g., **120**, **210**, **260**, **320**, **340**, **510**, **610**, **710**, or **890**, the same or similar multi-unit veneer, e.g., **120**, **210**, **260**, **320**, **340**, **510**, **610**, **710**, or **890**, or the same or similar like elements, respectively, as shown in and/or described with respect to FIGS. **1** to **3**, and **5** to **10,** and other figures herein, respectively, and vice versa.

Without limiting the foregoing and unless the context requires otherwise, the upper jaw or lower jaw **410**, the row of teeth, and each exemplary tooth **420** referenced with respect to FIG. 4 may represent the same or similar upper jaw or lower jaw, e.g., **110**, **220**, **270**, **310**, **330**, **550**, **750**, or **812**, the same or similar row of teeth, e.g., **115**, **220**, **270**, **550**, **750**, or **812**, the same or similar exemplary tooth, e.g., **115**, **610**, **560**, **755**, or **760,** or the same or similar like elements, respectively, as shown in and/or described with respect to FIGS. **1** to **3**, and **5** to **10**, and other figures herein, respectively, and vice versa. Without limiting the foregoing and unless the context requires otherwise, the gap **450**, the vestibular-, buccal-, labial-, oral-, lingual-, and palatal-facing surfaces, the concave oral-facing surface, the convex vestibular-facing surface, the saliva, the fixative cream, the capillary interfaces, the capillary bridges, the capillary adhesive forces, the holding, the design, the custom shaping, and derivative terms thereof, as each referenced with respect to FIG. **4** may represent, the same or similar gap, the same or similar vestibular-, buccal-, labial-, oral-, lingual-, and palatal-facing surfaces, the same or similar concave oral-facing surface, the same or similar convex vestibular-facing surface, the same or similar saliva, the same or similar fixative cream, the same or similar capillary interfaces, the same or similar capillary bridges, the same or similar capillary adhesive forces, the same or similar holding, or the same or similar like elements, respectively, as described and/or shown with respect to FIGS. **1** to **3**, and **5** to **10**, and other figures herein, respectively, and vice versa.

FIG. **5** shows an illustration of a cross-sectional occlusal view **500** of an exemplary upper jaw **550** of a dental patient or customer and a corresponding exemplary embodiment of a multi-unit veneer **510** operationally inserted, in accordance with one or more embodiments of the presently disclosed technology, which are, unless the context requires otherwise, combinable with any other embodiment disclosed herein.

The cross-sectional artificial surface **415** of the multi-unit veneer **510** illustrates an exemplary cross-sectional thickness profile **512** of the multi-unit veneer **510**. The exemplary cross-sectional artificial surface **565** of the corresponding exemplary tooth **560** illustrates an exemplary cross-sectional profile **565** of the tooth **560**. The gap between a plurality of vestibular-facing surfaces of a plurality of teeth, including exemplary tooth **560**, adjacent the multi-unit veneer **510** illustrates a plurality of capillary interfaces. Tooth **560** is, for example, tooth **420** shown in FIG. **4**. The capillary interface shown adjacent tooth **560** is the capillary interface shown as gap **450** in FIG. **4**. The exemplary cross-sectional thickness profile **512** of the multi-unit veneer **510** as illustrated by the cross-sectional artificial surface **512** of the multi-unit veneer **510** may show a variance of thickness of the multi-unit veneer **510** as it is extending along the archform of the row of teeth **550**. Said thickness profile **512** may have multiple local extrema. For example, a local minimum **515** is present adjacent to the corresponding canine. For example, a local minimum **525** is present adjacent to the corresponding central incisor. For example, a local maximum **520** is present adjacent a lateral incisor. For example, a local maximum **530** is present adjacent a central incisor. The profile of thickness **512** as described with respect to FIG. **5** may result from a design that accounts for the maloccluded positions of the teeth of the row of teeth **550**, including the exemplary tooth **560**, based on the mal-aligned vestibular-facing surfaces of such teeth, and an aesthetically pleasing mimicking of an artificial row of crowns of teeth, shaped, or carved into the vestibular-facing surface of the multi-unit veneer **510**. In one or more exemplary embodiments of the present technology, unless the context requires otherwise, combinable with any other embodiment disclosed herein, a removable dental appliance, for example, a multi-unit veneer **510** is designed and custom-shaped to fit a row of teeth of a person's jaw **550,** including an exemplary tooth **560** so that a thickness profile **512** along the arch of the jaw **550** having a plurality of local extrema, for example, at least two local minima **515**, and **525**, and/or, for example, at least two local maxima **520**, and **530**.

Without limiting the foregoing and unless the context requires otherwise, all features or other elements as disclosed herein with respect to FIG. **5** shall be deemed herewith disclosed in any combination with each other, in any partial combination with each other, and in any order; and shall be deemed herewith disclosed in combination with all features or other elements as disclosed herein with respect to FIGS. **1** to **4**, and **6** to **10** in any combination, in any partial combination, and in any order.

Without limiting the foregoing and unless the context requires otherwise, the removable dental appliance **510**, and the multi-unit veneer **510** referenced with respect to FIG. **5** may represent the same or similar removable dental appliance, e.g., **120**, **210**, **260**, **320**, **340**, **430**, **610**, **710**, or **890**, the same or similar multi-unit veneer, e.g., **120**, **210**, **260**, **320**, **340**, **430**, **610**, **710**, or **890**, or the same or similar like elements, respectively, as shown in and/or described with respect to FIGS. **1** to **4**, and **6** to **10**, and other figures herein, respectively, and vice versa. Without limiting the foregoing and unless the context requires otherwise, the upper jaw or lower jaw **550**, the row of teeth **550,** and each exemplary tooth **560** referenced with respect to FIG. **5** may represent the same or similar upper jaw or lower jaw, e.g., **110**, **220**, **270**, **310**, **330**, **410**, **750**, or **812**, the same or similar row of teeth, e.g., **115**, **220**, **270**, **410**, **750**, or **812**, the same or similar exemplary tooth, e.g., **115**, **610**, **420**, **755**, or **760**, or the same or similar like elements, respectively, as shown in and/or described with respect to FIGS. **1** to **4**, and **6** to **10**, and other figures herein, respectively, and vice versa.

Without limiting the foregoing and unless the context requires otherwise, the thickness profile **512**, and **565**, the variance of thickness, the cross-sectional profile **512**, the archform, the vestibular-facing surfaces, the capillary interfaces, the local extrema, the local minimum, the local maximum, the holding, the design, the custom shaping, and derivative terms thereof, as each referenced with respect to FIG. **5** may represent, the same or similar thickness profile, the same or similar variance of thickness, the same or similar cross-sectional profile, the same or similar archform, the same or similar vestibular-facing surfaces, the same or similar capillary interfaces, the same or similar local extrema, the same or similar local minimum, the same or similar local maximum, the same or similar holding, the same or similar design, the same or similar custom shaping, or the same or similar like elements, respectively, as described and/or shown with respect to FIGS. **1** to **4**, and **6** to **10**, and other figures herein, respectively, and vice versa.

FIG. **6** shows a schematic illustration **600** of an exemplary surface **610** of a tooth of a dental patient or customer or of an exemplary surface of a removable dental appliance, for example, multi-unit veneer, in accordance with one or more embodiments of the presently disclosed technology, which are, unless the context requires otherwise, combinable with any other embodiment disclosed herein. The illustration **600** further shows a local surface element **620** of the exemplary surface **610** and its spatial orientation, visualized by its normal vector n **630**, and by an exemplary tangent vector ***t* 635**.

Without limiting the foregoing and unless the context requires otherwise, all features or other elements as disclosed herein with respect to FIG. **6** shall be deemed herewith disclosed in any combination with each other, in any partial combination with each other, and in any order; and shall be deemed herewith disclosed in combination with all features or other elements as disclosed herein with respect to FIGS. **1** to **5**, and **7** to **10** in any combination, in any partial combination, and in any order. Without limiting the foregoing and unless the context requires otherwise, the removable dental appliance **610**, and the multi-unit veneer **610** referenced with respect to FIG. **6** may represent the same or similar removable dental appliance, e.g., **120**, **210**, **260**, **320**, **340**, **430**, **510**, **710**, or **890**, the same or similar multi-unit veneer, e.g., **120**, **210**, **260**, **320**, **340**, **430**, **510**, **710**, or **890**, or the same or similar like elements, respectively, as shown in and/or described with respect to FIGS. **1** to **5**, and **7** to **10**, and other figures herein, respectively, and vice versa. Without limiting the foregoing and unless the context requires otherwise, the exemplary tooth **610** referenced with respect to FIG. **6** may represent the same or similar exemplary tooth, e.g., **115**, **420**, **560**, **755**, or **760**, or the same or similar like elements, respectively, as shown in and/or described with respect to FIGS. **1** to **5**, and **7** to **10**, and other figures herein, respectively, and vice versa.

Without limiting the foregoing and unless the context requires otherwise, the surface **610**, the local surface element **620**, the normal vector ***n* 630**, the tangent vector ***t* 635**, and derivative terms thereof, as each referenced with respect to FIG. **6** may represent, the same or similar surface, the same or similar local surface element, the same or similar normal vector, the same or similar tangent vector, or the same or similar like elements, respectively, as described and/or shown with respect to FIGS. **1** to **5**, and **7** to **10**, and other figures herein, respectively, and vice versa.

FIG. **7** shows a schematic illustration **700** of the cross-sectional occlusal view of an exemplary upper jaw **750** of a dental patient or customer and a corresponding exemplary embodiment of a removable dental appliance **710**, for example, a multi-unit veneer **710** operationally inserted, as shown in FIG. **5**, in accordance with one or more embodiments of the presently disclosed technology, which are, unless the context requires otherwise, combinable with any other embodiment disclosed herein.

The illustration **700** shows, for example, a tooth **755**, having a local vestibular-facing surface visualized adjacent and described by the exemplary tangent line **730**, in analogy to the tangent vector ***t* 635** as shown in and as described with reference to FIG. **6**, and visualized and described by the exemplary normal line **732**, in analogy to the normal vector ***n* 630** as shown in and as described with reference to FIG. **6**. The illustration **700** further shows, for example, a tooth **760**, having a local vestibular-facing surface visualized adjacent and described by the exemplary tangent line **735**, in analogy to the tangent vector ***t* 635** as shown in and as described with reference to FIG. **6** and visualized and described by the exemplary normal line **737**, in analogy to the normal vector ***n* 630** as shown in and as described with reference to FIG. **6****.**

The illustration **700** shows, for example, that the orientation of said two local vestibular-facing surfaces of the teeth **755,** and **760** form an exemplary geometrical angle α (alpha) **740**, as visualized between the exemplary normal lines **732**, and **737**, which is, for example, shown greater than 180°. The arc of contact, including said local vestibular surfaces, results, when vestibular undercuts in the interproximal distance adjacent the exemplary tangent lines **730**, and **735**, and the normal lines **732**, and **737** are present, in a geometrical angle of an arc of contact greater than 180°. Hence, said local vestibular-facing surfaces, as shown in FIG. **7**, present an exemplary vestibular-facing arc of contact, or wrap angle, which presents an undercut being utilized for a vestibular clip-on mechanism, when the multi-unit veneer **710** is configured, designed and/or custom-shaped, to form a custom-shaped form-lock fit with the corresponding teeth of the row of teeth **750** when operationally placed adjacent the said teeth. In one or more exemplary embodiments of the present technology, unless the context requires otherwise, combinable with any other embodiment disclosed herein, a removable dental appliance, for example, a multi-unit veneer **710** is configured, designed and/or custom-shaped to fit a row of teeth of a person's jaw **750,** including exemplary teeth **755**, and **760** so that a form-lock fit between local vestibular-facing surface elements of certain teeth, e.g., **755**, and **760**, presenting, for example, an undercut when viewed from a certain vestibular direction, and correlating local oral-facing surface elements of the removable dental appliance **710**, for example, the multi-unit veneer **710.** This form-lock fit may hold the removable dental appliance **710**, for example, the multi-unit veneer **710**, operationally in position adjacent the row of teeth **750** when operationally placed, for example, when utilizing the elasticity of the removable dental appliance **710**, for example, the multi-unit veneer **710** to clip-on the removable dental appliance **710**, for example, the multi-unit veneer **710**, onto the row of teeth **750**.

Without limiting the foregoing and unless the context requires otherwise, all features or other elements as disclosed herein with respect to FIG. **7** shall be deemed herewith disclosed in any combination with each other, in any partial combination with each other, and in any order; and shall be deemed herewith disclosed in combination with all features or other elements as disclosed herein with respect to FIGS. **1** to **6**, and **8** to **10** in any combination, in any partial combination, and in any order.

Without limiting the foregoing and unless the context requires otherwise, the removable dental appliance **710,** and the multi-unit veneer **710** referenced with respect to FIG. **7** may represent the same or similar removable dental appliance, e.g., **120, 210, 260, 320, 340, 430, 510, 610, or 890,** the same or similar multi-unit veneer, e.g., **120**, **210**, **260**, **320**, **340**, **430**, **510**, **610, or 890,** or the same or similar like elements, respectively, as shown in and/or described with respect to FIGS. **1** to **6**, and **8** to **10,** and other figures herein, respectively, and vice versa. Without limiting the foregoing and unless the context requires otherwise, the upper jaw or lower jaw **750**, the row of teeth **750,** and each exemplary tooth **755,** and **760** referenced with respect to FIG. **7** may represent the same or similar upper jaw or lower jaw, e.g., **110**, **220**, **270**, **310**, **330**, **410**, **550**, or **812**, the same or similar row of teeth, e.g., **115**, **220**, **270**, **550**, or **812**, the same or similar exemplary tooth, e.g., **115**, **220**, **270**, **420**, **610**, or **560**, or the same or similar like elements, respectively, as shown in and/or described with respect to FIGS. **1** to **6**, and **8** to **10**, and other figures herein, respectively, and vice versa.

Without limiting the foregoing and unless the context requires otherwise, the local vestibular-facing surface, the tangent lines **730**, and **735**, the normal lines **732**, and **737**, the local vestibular-facing surfaces, the angle α (alpha) **740**, the vestibular-facing contact arc, the wrap angle, the undercut, the clip-on mechanism, the clip-on, the design, the shaping, the elasticity, the custom-shaping, the form-lock fit, the form-lock, and derivative terms thereof, as each referenced with respect to FIG. **7** may represent, the same or similar local vestibular-facing surface, the same or similar tangent lines, the same or similar normal lines, the same or similar local vestibular-facing surfaces, the same or similar angle α (alpha), the same or similar vestibular-facing contact arc, the same or similar wrap angle, the same or similar undercut, the same or similar clip-on mechanism, the same or similar clip-on, the same or similar design, the same or similar shaping, the same or similar elasticity, the same or similar custom-shaping, the same or similar form-lock fit, the same or similar form-lock, or the same or similar like elements, respectively, as described and/or shown with respect to FIGS. **1** to **6**, and **8** to **10**, and other figures herein, respectively, and vice versa.

FIG. **8** shows a schematic block diagram illustrating an exemplary embodiment of the ordering and manufacturing process and related information technology (IT) and other systems components and method steps in accordance with one or more embodiments of the presently disclosed technology, which are combinable with any other embodiment disclosed herein.

The system **800** presented in FIG. **8** indicates in one or more exemplary embodiments of the presently disclosed technology, unless the context requires otherwise, combinable with any other embodiment disclosed herein, a workflow, method steps, the flow of data, the acquisition of image data, the generation of a treatment plan or technical specification **859,** the CAD/CAM design and manufacturing, and the delivery of a removable dental appliance **890,** for example, a multi-unit veneer **890,** and the supporting information technology (IT) and other systems components and configuration assisting in the design and/or manufacturing of a removable dental appliance **890,** for example, an multi-unit veneer **890,** for example, for a rehabilitation and/or the aesthetic improvement of a dentition **812** of a dental patient or customer **810**.

For example, utilizing a handpiece of a 3D intraoral scanner **820** connected to its control unit **822**, a spatial image of anatomical surfaces of the upper and/or lower jaw and its respective teeth, also referred to herein as a row of teeth **812,** for example, including a bite registration, of the dentition **812** may be taken, the 3D scan data **824**, may be transferred **832** through the internet **840** or a local network to a (for example, cloud-based) data storage system including a database 830. Alternatively or additionally, for example, anatomical structures of and adjacent to the dentition **812** of the patient **810** may be X-rayed using a cone beam computer tomography (CBCT) machine connected to a control unit, and the 3D image data **824**, may be transferred through the internet **840** or a local network to a (for example, cloud-based) data storage system, including a database **830**.

Further, for example, anatomical structures of the patient **810** may be imaged by a clinical imaging unit connected to its respective control unit, and 2D, 3D, and/or 4D image data, may be captured and transferred through the internet **840** or a local network to a (for example, cloud-based) data storage system, including a database **830**. The imaging data **824** may be alternatively acquired by digitizing a physical dental impression, a physical bite registration and/or a physical stone model representing the patient's or customer's dental anatomy. Suitable clinical image units may use computer tomography (CT), cone-beam CT (CBCT), magnetic resonance imaging (MRI), ultrasound, active triangulation, passive triangulation, confocal scanning, and time-of-flight (TOF) technologies.

In this context and throughout this disclosure, the term "image data", and derivative or similar words shall be understood as being generic to all possible meanings supported by the specification and by the words itself; the meaning shall, however, include herein, without limiting the foregoing and unless the context requires otherwise, any numerical or computer-implemented two-dimensional, three-dimensional, or four-dimensional description, representation, reproduction, or imitation of the appearance of a mammalian anatomy, or in general, a thing, or respective parts thereof. In this context and throughout this disclosure, the term "3D", "three-dimensional", and derivative or similar words shall be understood as being generic to all possible meanings supported by the specification and by the words itself; the meaning shall, however, include herein, without limiting the foregoing and unless the context requires otherwise, something of two-dimensional extension and the changes thereof throughout time, or as something of three-dimensional, spatial extension, as the context suggests. The term "4D", or "four-dimensional", and derivative or similar words shall be understood herein as something of three-dimensional, spatial extension and the changes thereof throughout time.

In this context and throughout this disclosure, the term "spatial", and derivative or similar words shall be understood as being generic to all possible meanings supported by the specification and by the words itself; the meaning shall, however, include herein, without limiting the foregoing and unless the context requires otherwise, one or more of: three-dimensional, relating to or occupying space, non-linear, non-planar, and/or being of natural physical real and non-mathematical shape. Image data may include data, including virtual surface data, and/or data representative of a surface.

In this context and throughout this disclosure, the term "surface", and derivative or similar words shall be understood as being generic to all possible meanings supported by the specification and by the words itself; the meaning shall, however, include herein, without limiting the foregoing and unless the context requires otherwise, one or more of: an outside of a physical body, a virtual surface, a numerical representation of a surface, a virtual outside of a numerical representation of a body, a surface boundary, a transitional surface boundary, a virtual shape contour, a physical shape contour, a virtual edge contour, and/or a physical edge contour.

As it relates to the terms a "virtual surface", and/or a "numerical representation of a surface", and derivative or similar terms, it should be understood that those surfaces have no inside or outside per se, to the extent that an inverse surface to such surface would be identical to such surface itself. Surface data may be represented as a plurality of the three-dimensional coordinates, a point cloud, a plurality of coordinated triangles, a mesh, or otherwise. Two-dimensional X-ray or MRI data may include a plurality of pixel, each pixel of that plurality may include a tissue density, or a greyscale value. Three-dimensional X-ray or MRI data may include a plurality of voxel, each voxel may include a include a tissue density, or a greyscale value.

Clinical imaging data may be acquired directly by suitable devices or indirectly, for example, by digitizing or performing a 3D scan of a stone or gypsum model of a dental arch, made from a physical dental impression, where a gooey material is pushed into a person's teeth, and it stays there for the two to five minutes it takes for the material to set. The material can be, for example, alginate or silicone. The physical impression can be made in one pass or in layers. Some manufacturers are sending home kits with the materials and instructions to a dental patient or customer inviting the patient or person to make the physical impression do-it-yourself (DIY). The physical impression may be sent to a dental laboratory or a device manufacturer and may be scanned directly in three-dimensions, and thereby digitized to make such indirect imaging data available for further processing. The physical impression may be used to mold a dental stone or gypsum model by a dental laboratory, or a device manufacturer and the dental stone or gypsum model may be scanned directly in three-dimensions, and thereby digitized to make such indirect imaging data available for further processing.

The scan and/or other image data may be subsequently made available **859** to a personal computer (PC) or workstation for design and/or treatment planning **850**, comprising, for example, a computer monitor displaying, for example, various user interfaces, including the user interface for design of the removable dental appliance **852**. A technical specification **859,** a partial or full design, and a simulation **859**, also referred herein to as a treatment plan **859**, may comprise a three-dimensional model of the human anatomy, e.g., the dentition **812** of the patient or customer **810,** a numerical description, and/or a three-dimensional model of the removable dental appliance **890,** for example, a multi-unit veneer.

The treatment plan **859** or the custom technical specification **859** may be transferred through the internet **840** or a local network and may be made available **869** to personal computer (PC) or workstation, for CAD/CAM operations **860**, where the design of the appliance may take place, and subsequently computer numerical control (CNC) data **870**, may be derived and transferred to a manufacturing facility **880**, where, for example, equipment for primary, additive, subtractive and/or forming manufacturing **880** may be utilized to fabricate the removable dental appliance **890,** for example, a multi-unit veneer **890** according to one or more exemplary embodiments of the present technology disclosed herein, unless the context requires otherwise, combinable with any other embodiment disclosed herein, responsive to the design data **869**, and/or computer numerical control (CNC) data **870**. The removable dental appliance **890**, e.g., the multi-unit veneer **890** can then, for example, be delivered to the office of the medical doctor, for example, the treating dentist or dental specialist or directly to the dental patient or customer **810,** and may be inserted and integrated into the body, for example, the dentition **812** of a pre-identified patient or customer **810** for rehabilitation or augmentation, for example, for rehabilitation and/or aesthetic and/or functional improvement of such patient's or customer's dentition **812**.

Each personal computer (PC) or workstation **850**, and **860** may comprise a respective hardware and software configuration **855**, and **865**, comprising, for example, a memory **856,** and **866**, one or more processors **857**, and **867**, and a communications interface **858**, and **868.** The database **830**, for example, a relational SQL database **830**, may be stored on, and the memories **830**, **856**, and **866** may comprise one or more non-transitory processor-readable media, as described in detail herein. The computer data **824**, **832**, **859**, **869**, and **870,** and the computer data transferred within the computer hardware configurations **855**, and **865** and within the manufacturing facility **880** may be transferred and/or transmitted by any one or more physical, transferrable, and reproducible computer data signal **824**, **825**, **832**, **840**, **859**, **869**, and **870**, as described in detail herein, utilizing any wired and wireless transmission device and technology, as described in detail herein.

The software configurations **855**, and **865**, may comprise one or more computer program products, including, for example, processor-readable instructions, that may be received by the processor(s) **857**, and **867**, for example, from one or more non-transitory processor-readable memories **830**, **856**, and **866**, by means of one or more non-transitory processor-readable media, or by one or more non-transitory computer data signal. The computer program products may be articles of manufacture, and may comprise firmware, operating systems, and/or applications. The computer program product may encode a computer program for executing on a computer system and/or one or more processors **857**, and **867** a computer process, comprising, for example, a plurality of functions. When implemented in software or firmware, various elements of the systems described herein can be code segments or instructions that perform the various tasks. The program or code segments can be stored in a processor-readable medium or transmitted by a computer data signal embodied in a carrier wave over a transmission medium or communication path.

In one or more exemplary embodiments, unless the context requires otherwise, combinable with any other embodiment disclosed herein, a computer program product **855,** and **865** is operational or otherwise configured to assist in a treatment of a pre-identified patient or customer **810**, utilizing a removable dental appliance **890**, for example, a multi-unit veneer **890**, the computer program product **855**, and **865** encoding a computer program for executing on a computer system **850**, and **860** a computer process, the computer process comprising: receiving first numerical data **824**, **832**, **859**, and **869** comprising clinical data **824**, **825**, and an initial technical specification **859** of the removable dental appliance **890**. The clinical data **824,** and **825** may be representative of an anatomical structure **812** of the pre-identified patient or customer **810**. Automatic, semi-automatic and/or interactive computer processes may process the first numerical data **824**, **832**, **859**, and **869** and/or the clinical data **824**, and **825** for visualization, and may enhance and may combine clinical data **824**, and **825.** Further, automatic, semi-automatic, and/or interactive computer processes may segment and label anatomical data, creating anatomical models responsive to the first numerical data **824**, **832**, **859**, and **869**, and/or the clinical data **824**, and **825**, the models being, for example, specific to the anatomical structures of the pre-identified patient or customer **810**.

In this context, such computer processes may include numerical instructions simulating an engagement and/or disengagement direction or path for a removable dental appliance **890**, for example, a multi-unit veneer **890,** relative to a row of teeth **812** that the patient or customer **810** presents responsive, for example, to the first numerical data **824**, **832**, **859**, and **869** and/or the clinical data **824**, and **825.** Such computer processes may include numerical instructions to identify undercuts in vestibular-facing surfaces of a plurality of crowns of the plurality of teeth included in the row of teeth **812** responsive, for example, to the first numerical data **824**, **832**, **859**, and **869** and/or the clinical data **824**, and **825**. The engagement and/or disengagement direction or path may be used to numerically identify the surfaces presenting the undercuts.

Further in this context, such computer processes may include numerical instructions to identify vestibular-facing surfaces areas included in surfaces of a plurality of crowns of the plurality of teeth included in the row of teeth **812** suitable to form capillary interfaces with surfaces of the removable dental appliance **890**, for example, the multi-unit veneer **890**, when operationally placed adjacent the row of teeth **812** that the patient or customer **810** presents responsive, for example, to the first numerical data **824**, **832**, **859**, and **869** and/or the clinical data **824**, and **825**. Further in this context, such computer processes may include numerical instructions to derive a profile of thickness of the archform layer that predominantly forms the removable dental appliance **890**, for example, the multi-unit veneer **890** responsive, for example, to the first numerical data **824**, **832**, **859**, and **869** and/or the clinical data **824**, and **825**. Computer aided self-learning algorithms and/or artificial intelligence functions of computer processes may assist in the segmentation and labeling of the specific anatomical structures based on statistical models of anatomical structures.

In this context and throughout this disclosure, the term "model", without any specifier shall be understood herein as a "virtual model", unless the context requires otherwise. The term "virtual model", and derivative or similar words shall be understood as being generic to all possible meanings supported by the specification and by the words itself; the meaning shall, however, include herein, without limiting the foregoing and unless the context requires otherwise, any numerical or computer-implemented description, representation, reproduction, or imitation of the past, present, or future state of something, for example, in the given context of anatomical structures, or designs of removable dental appliances, for example, multi-unit veneers, or portions thereof.

The models may be required to have a substantial spatial extension. In this context and throughout this disclosure, the term "substantial spatial extension", and derivative or similar terms shall be understood as being generic to all possible meanings supported by the specification and by the words itself; the meaning shall, however, include herein, without limiting the foregoing and unless the context requires otherwise, any spatial extension that is not nonmaterial. Models, manufactured removable dental appliances, for example, multi-unit veneers, accessory parts or portions thereof may correlate to spatial surfaces of anatomical structures of the pre-identified patient or customer **810**.

In this context and throughout this disclosure, the term "correlating to a surface or shape", or "correlating to a corresponding surface", and derivative or similar terms shall be understood as being generic to all possible meanings supported by the specification and by the words itself; the meaning shall, however, include herein, without limiting the foregoing and unless the context requires otherwise, one or more of: substantially matching a similar shape of a corresponding surface, substantially matching a similar shape of a dimensionally reduced virtual representation of a corresponding surface, substantially matching a similar shape of a dimensionally expanded virtual representation of a corresponding surface, substantially matching a similar shape of an undersized virtual representation of a corresponding surface, and/or substantially matching a similar shape of an oversized virtual representation of a corresponding surface.

The computer system may comprise one or more processors **857**, and **867**. The processor(s) **857**, and **867** may be operationally connected to a non-transitory processor-readable medium **856**, **866**, **858**, **868**, **859**, and **869** through or from which the processor(s) receives encoded computer program instructions, comprised in the computer program product. The non-transitory processor-readable medium **856**, **866**, **858**, **868**, **859**, and **869** may be a memory **856**, and **866**, for example, a solid-state-drive (SSD) **856**, and **866.** The non-transitory processor-readable medium **856**, **866**, **858**, **868**, **859**, and **869** may be a computer data signal **859**, and **869**, transmitted, for example, via a wireless local area network (WLAN) **859**, and **869**. The WLAN **859**, and **869** may use a physical electromagnetic carrier signal to transfer the encoded program instructions, using a protocol that ensures the program instruction are reproducibly transferred.

In one or more exemplary embodiments of the presently disclosed technology, unless the context requires otherwise, combinable with any other embodiment disclosed herein, a removable dental appliance **890** is operational or otherwise configured for dental insertion. A numerical description of a first surface of the removable dental appliance **890** may be at least partially representative of an anatomical shape correlating to the crown of a row of teeth **812** of a pre-identified patient or customer **810,** and/or, for example, a gingival margin of the pre-identified patient or customer **810**. A manufacturing process **880** machining the first surface of the removable dental appliance dental **890** can use a process of customization so that the first macroscale shape of the removable dental appliance **890** correlates at least partially to the anatomical shape. During the design process the received technical specification that may not be patient-specific, may be updated to include at least a partial model of first surface of the removable dental appliance **890**.

A method of manufacturing **880** of a customized removable dental appliance **890** for a pre-identified patient or customer **810** may be employed, the method comprising: obtaining a proposed technical specification or description of the removable dental appliance **890,** the removable dental appliance **890** includes an oral-facing surface operational to clip-on or being otherwise held to and by the shape and contour of vestibular-facing surfaces of the row of teeth **812** of the dental patient or customer **810.** During the design process a proposed technical specification **859** of the removable dental appliance **890** may be updated responsive to the design to thereby form an updated specification **859.**

Computer numerical control (CNC) data **870** may be derived from the patient-specific design data or custom-shaped virtual models **869** of the removable dental appliance **890,** for example, the multi-unit veneer **890**. The removable dental appliance **890,** for example, the multi-unit veneer **890** may be machined responsive to the computer numerical control (CNC) data **870**. In this context and throughout this disclosure, the term "machined", "machining", and derivative or similar words shall be understood as being generic to all possible meanings supported by the specification and by the words itself; the meaning shall, however, include herein, without limiting the foregoing and unless the context requires otherwise, a process of shaping a body of material by forming, removing or adding portions of material within, to or from the body of material. Selective laser melting, selective laser sintering, laser ablation, stereo-lithography, CNC grinding, CNC turning, CNC laser or water cutting or shaping, CNC milling technologies, additive shaping technologies, subtractive shaping technologies, shape forming manufacturing technologies, primary shaping technologies, rapid prototyping and/or other machining and finishing technologies may also be considered non-limiting examples.

In this context and throughout this disclosure, the term "rapid prototyping", and derivative or similar words shall be understood as being generic to all possible meanings supported by the specification and by the words itself; the meaning shall, however, include herein, without limiting the foregoing and unless the context requires otherwise, manufacturing technologies based on digital data, by a process that includes depositing material, in accordance with the digital data, layer-by-layer in a plurality of layers each constituting a two-dimensional cross section of a solid object having an edge defined by the digital data of the three-dimensional surface. By way of example, and not limitation, the layers from the two-dimensional surface may be stacked in a third dimension to form the solid object having a three-dimensional surface defined by the data. Rapid prototyping processes, for example 3D printing processes, may be used for fabricating objects from more than one material.

All such rapid prototyping technologies may be used directly to manufacture the part of interest, for example, by selective laser sintering. They may conversely be used indirectly by fabricating first, for example, a resin or wax sample of the part of interest that can be used, for example, to make the actual part by lost wax casing technology. The aforementioned processes may include sintering processes where a "green" body is 3D printed in response to computerized numerical controlled (CNC) data **870** and then sintered to its final material properties. Sintering in this context may include pressure and heat. Further, the meaning of "rapid prototyping", and derivative or similar words shall include in its broadest technical sense, where individualized parts are made from virtual representations, and shall include respective primary, additive, subtractive and other forming technologies used to three-dimensionally shape workpieces. The meaning of "shape forming", and derivative or similar words shall include but shall not be limited to net shape or near net shape forming technologies, CNC stamping, CNC pressing, and CNC casting technologies. Manufacturing equipment may be based on multi-axis (e.g., 5-axis) operations.

The manufacturing system **800** may further comprise a technical specification **859** , **869, or 870** that identifies the workpiece as a semi-finished or finished product to become a removable dental appliance, for example, a multi-unit veneer. In this context and throughout this disclosure, the term "technical specification", and derivative or similar words shall be understood as being generic to all possible meanings supported by the specification and by the words itself; the meaning shall, however, include herein, without limiting the foregoing and unless the context requires otherwise, a full or partial description or identification of a designation, a design, a material composition, or a function, and any combination thereof. By way of example, and not limitation, the description may be made by direct or indirect reference and may include explicit or implicit elements. A technical specification may be paper-based or paperless, and may include a job order, a design, a drawing, a bill of materials, a manufacturing operating directive, a standard operating procedure, a material receipt, a delivery note, and/or the like.

In one or more exemplary embodiments of the present technology, unless the context requires otherwise, combinable with any other embodiment disclosed herein, a design and/or manufacturing process may include the method steps to receive obtain a generic technical specification or a generic description of a removable dental appliance **890,** for example, of a multi-unit veneer **890,** and to update the technical specification or derive an updated technical specification, for example, responsive to clinical imaging data **824** of the pre-identified patient or customer **810**. In this context, the generic technical specification may include specifications with respect to the material composition of the material used in shape-forming the archform layer of the removable dental appliance **890,** for example, of the multi-unit veneer **890,** the parameters for 3D printing, the material composition of the material used for coating, and/or work instructions how to design and physically fabricate the removable dental appliance **890,** for example, of a multi-unit veneer **890**. A generic or predominantly generic technical specification, including a three-dimensional generic or predominantly generic model of a removable dental appliance **890**, for example, of a multi-unit veneer **890,** including for example, an aesthetically shaped vestibular surface mimicking the appearance of aligned teeth, may be received for example, from a digital library **830**, and may be updated with a custom-shape model of a oral-facing surface of correlating to a surface of the row of teeth **812** of the pre-identified patient or customer **810,** so that the design of the removable dental appliance **890,** for example, of a multi-unit veneer **890,** is configured to model a form-lock fit and/or a fit configured to provide a plurality of capillary interfaces when the removable dental appliance **890**, for example, of a multi-unit veneer **890** is operationally placed onto a corresponding row of teeth **812** the patient or customer presents.

The medical device manufacturing system **800** may further comprise computer numerical control (CNC) data **870** as computer-executable instructions embodied in one or more non-transitory processor-readable media. The computer numerical control (CNC) data **870** as computer-executable instructions may be stored or storable on one or more non-transitory processor-readable memories. The computer numerical control (CNC) data **870** as computer-executable instructions may be alternatively or additionally embodied in one or more non-transitory processor-readable computer data signals as computer-executable instructions. In this context and throughout this disclosure, the term "non-transitory processor-readable medium", and/or "statutory processor-readable medium", and derivative or similar words shall be understood herein as being generic to all possible meanings supported by the specification and by the words itself; provided, however, that the meaning shall include any non-transitory processor-readable memory or any non-transitory computer data signal except any non-patent-eligible subject matter as defined in the applicable jurisdiction by the then applicable law and case law as being not patentable.

In this context and throughout this disclosure, the term "non-transitory processor-readable memory", and derivative or similar words shall be understood herein as being generic to all possible meanings supported by the specification and by the words itself; the meaning shall, however, include, without limiting the foregoing and unless the context requires otherwise, any medium that can store or transfer information, by way of example, and not limitation: any dynamic, static, read/write, read-only, sequential-access, location-addressable, file-addressable, and/or content-addressable data storage device; register memory, processor cache and RAM; any semiconductor memory device, ROM, flash memory, erasable ROM, EPROM, EEPROM, flash memory, or other solid state memory technology; magnetic memory, magnetic cassettes, magnetic tape, magnetic disk, or other magnetic data storage devices; floppy diskette, CD-ROM, digital versatile disks, DVD, HD-DVD, or BLU-RAY disc, optical disk, hard disk, MRAM, and/or like device. In this context and throughout this disclosure, the term "non-transitory computer data signal", and/or "statutory computer data signal", and derivative or similar words shall be understood herein as being generic to all possible meanings supported by the specification and by the words itself; provided, however, that the meaning shall include any computer data signal except any non-statutory subject matter as defined in the applicable jurisdiction by the then applicable law and case law as being not patentable.

By way of example, and not limitation, non-transitory computer data signal shall include any physical, transferrable, and reproducible computer data signal. Such non-transitory computer data signals may include, by example and not limitation, data transmitted in blocks, followed by a check of the integrity of the receiver's data, so that, if there is a single bit error, the entire block must retransmit until the reproducibility has been guaranteed (e.g., utilizing error correction functionality). In this context and throughout this disclosure, the term "computer data signal", and derivative or similar words shall be understood herein as being generic to all possible meanings supported by the specification and by the words itself; the meaning shall, however, include, without limiting the foregoing and unless the context requires otherwise: any signal that can propagate encoded information such as computer readable instructions, encoded logic, data, data structures, program modules, or other data over a transmission medium; other transport mechanisms, or delivery media such as a carrier wave; parallel or serial computer bus systems; electronic network channels; optical fibers; air, infrared, acoustic or electromagnetic paths; RF links; or other wired or wireless configurations.

By way of example, and not limitation: computer networks such as the internet, intranet, LAN, serial or parallel bus systems, or otherwise; supported by network connectivity devices that may take the form of modems, modem banks, Ethernet cards, Universal Serial Bus (USB) interface cards, serial interfaces, token ring cards, fiber distributed data interface (FDDI) cards, wireless local area network (WLAN) cards, radio transceiver cards, and/or other like network connectivity devices. The network connectivity devices may provide wired communication links and/or wireless communication links. Wired communication links may be provided in accordance with Ethernet (IEEE 802.3), Internet protocol (IP), time division multiplex (TDM), data over cable service interface specification (DOCSIS), wavelength division multiplexing (WDM), and/or the like. Radio transceiver cards may provide wireless communication links using protocols such as code division multiple access (CDMA), Global System for Mobile Communications (GSM), LTE, WI-FI (IEEE 802.11), BLUETOOTH, ZIGBEE, narrowband Internet of things (NB loT), near field communications (NFC), and radio frequency identity (RFID). The radio transceiver cards may promote radio communications using 5G, 5G New Radio, or 5G LTE radio communication protocols. Wireless connection may also proceed via satellite link (e.g., Starlink). These network connectivity devices may enable a processor or processors to communicate with the Internet or one or more intranets. With such a network connection, it is contemplated that a processor or processors might receive information from the network and/or might output information to the network. Such information, which is often represented as a sequence of instructions to be executed using a processor or processors, may be received from and/or outputted to the network, for example, in the form of a computer data signal embodied in a carrier wave.

In the context of FIG. **8** and throughout this disclosure, embodiments of the subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processing systems or devices can carry out the described operations, tasks, and functions by manipulating electrical, and other processing, signals representing data bits at accessible memory locations. The memory locations where data bits are maintained are physical locations that have particular electrical, magnetic, optical, or organic properties corresponding to the data bits.

It should be appreciated that the various block components of a control unit, a personal computer (PC) or a workstation **850**, **860**, a local or wide-area network **840**, a database **830**, and/or data storage system **830** shown in FIG. **8** and in other figures herein may be realized by any number of hardware, software, and/or firmware components operational or otherwise configured to perform the specified functions. For example, an embodiment of a system or a component, unless the context requires otherwise, combinable with any other embodiment disclosed herein, may employ various integrated circuit components such as: memory elements, digital signal processing elements, logic elements, look-up tables, or the like. These components may carry out a variety of functions under the control of one or more microprocessors or other control devices. When implemented in software or firmware, various elements of the systems described herein can code segments or instructions that perform various tasks. The program or code segments can be stored in a processor-readable medium and/or can be transmitted by a computer data signal embodied in a carrier wave over a transmission medium (or communication path). In this regard, the subject matter described herein can be implemented in the context of any computer-implemented system and/or in connection with two or more separate and distinct computer-implemented systems that cooperate and communicate with one another.

Without limiting the foregoing and unless the context requires otherwise, all features or other elements as disclosed herein with respect to FIG. **8** shall be deemed herewith disclosed in any combination with each other, in any partial combination with each other, and in any order; and shall be deemed herewith disclosed in combination with all features or other elements as disclosed herein with respect to FIGS. **1** to **7**, and **9** and **10** in any combination, in any partial combination, and in any order. Without limiting the foregoing and unless the context requires otherwise, the removable dental appliance **890**, and the multi-unit veneer **890** referenced with respect to FIG. **8** may represent the same or similar removable dental appliance, e.g., **120**, **210**, **260, 320, 340, 430, 510, 610, or 710,** the same or similar multi-unit veneer, e.g., **120**, **210**, **260**, **320, 340, 430, 510, 610, or 710,** or the same or similar like elements, respectively, as shown in and/or described with respect to FIGS. **1** to **7**, , **9** and **10**, and other figures herein, respectively, and vice versa.

Without limiting the foregoing and unless the context requires otherwise, the upper jaw or lower jaw **812,** and the row of teeth **812** referenced with respect to FIG. **8** may represent the same or similar upper jaw or lower jaw, e.g., **110**, **220**, **270**, **310**, **330**, **410**, **550**, or **750**, the same or similar row of teeth, e.g., **110**, **220**, **270**, **550**, or **750**, or the same or similar like elements, respectively, as shown in and/or described with respect to FIGS. **1** to **7**, , **9** and **10**, and other figures herein, respectively, and vice versa.

Without limiting the foregoing and unless the context requires otherwise, the anatomical structures, the image data, the clinical data **824**, and **825**, the treatment plan or technical specification **859**, the dental patient or customer **810**, the computer numerical control (CNC) data **870**, the computer data or computer data signals **824**, **832**, **859**, **869**, and **870,** the one or more processors **857**, and **867**, the computer hardware configurations **855,** and **865**, the personal computer (PC) or workstations **850**, and **860**, the one or more memory **856,** and **866,** the manufacturing facility, manufacturing systems, manufacturing equipment, or manufacturing methods **880**, the 3D printer, machining system, the software, computer program products, or software configurations **855**, and **865**, the processor-readable instructions, the numerical specification **870**, the machine equipment, the local or wide-area network **840**, the database **830**, the data storage system **830**, the profile of thickness, the undercuts, the capillary interfaces, and derivative terms thereof, as each referenced with respect to FIG. **8** may represent the same or similar anatomical structures, the same or similar image data, the same or similar clinical data, the same or similar treatment plan or technical specification, the same or similar patient or customer, the same or similar computer numerical control (CNC) data, computer data or computer data signals, the same or similar one or more processors, the same or similar computer hardware configurations, personal computer (PC) or workstation, the same or similar one or more memory, the same or similar manufacturing facility, manufacturing system, manufacturing equipment, or manufacturing or design methods, e.g., **910**, **920**, **930**, **940**, **950**, **960**, **1010**, **1020**, **1030**, or **1040**, the same or similar 3D printing or machining processes, e.g., **950**, the same or similar software, computer program products, or software configurations, the same or similar processor-readable instructions, the same or similar specification, the same or similar machine equipment, the same or similar local or wide-area network, the same or similar database, the same or similar data storage system, the same or similar profile of thickness, the same or similar undercuts, the same or similar capillary interfaces, or the same or similar like elements, respectively, as shown in and/or described with respect to FIGS. **1**, to **7**, , **9** and **10**, and other figures herein, respectively, and vice versa.

Without limiting the foregoing and unless the context requires otherwise, the manufacturing process **800**, the various method steps, including, for example, the 3D printing, the machining, the shaping, the digitizing, the shape forming, the rapid prototyping, the cleaning, the coating, the design, the clip-on mechanism, the various elements of a manufacturing system **820**, **822**, **824**, **830**, **832**, **840**, **852**, **850**, **855**, **856**, **857**, **858**, **859**, **860**, **865**, **866**, **867**, **868**, **869**, **870**, or **880,** the technical specification, the description, the update, and derivative terms thereof, referenced with respect to FIG. **8** may represent the same or similar manufacturing process, e.g., **900**, or **1000**, the same or similar various method steps, e.g., **910**, **920**, **930**, **940**, **950**, **960**, **1010**, **1020**, **1030**, or **1040**, including, for example, the same or similar 3D printing, the same or similar machining, the same or similar shaping, the same or similar digitizing, the same or similar shape forming, the same or similar rapid prototyping, the same or similar cleaning, the same or similar coating, the same or similar design, the same or similar clip-on mechanism, the same or similar various elements of a manufacturing system, the same or similar technical specification, the same or similar description, the same or similar update, or the same or similar like elements, respectively, as described and/or shown with respect to FIGS. **1** to **7**, , **9** and **10**, and other figures herein, respectively, and vice versa.

FIG. **9** shows an illustration of an exemplary embodiment of a flow diagram for a plurality of method steps for manufacturing a removable dental appliance in accordance with one or more embodiments of the presently disclosed technology which are combinable with any other embodiment disclosed herein.

Flow diagram **900** shows one or more other exemplary embodiments, unless the context requires otherwise, combinable with any other embodiment disclosed herein, of a method of manufacturing a removable dental appliance, for example, a multi-unit veneer. The method depicted in diagram **900** can comprise: method step **910** of obtaining first numerical data or imaging data representing a row of teeth of a pre-identified person; method step **920** of deriving from the first numerical data or imaging data a first surface model including a plurality of concave appliance surfaces models; method step **930** of obtaining a second surface model including a plurality of convex appliance surfaces models; method step **940** of deriving or combining a custom-shaped archform layer model from the first surface model in combination with the second surface model; method step **950** of 3D printing or otherwise machining a custom-shaped archform layer responsive to the custom-shaped archform layer model; and method step **960** of coating the custom-shaped archform layer to thereby form a multi-unit veneer.

The method steps **910**, **920**, **930**, **940**, **950**, and **960** may be combined in any order and in any partial combination in any order. For example, a method **900** may comprise: method step **910** of obtaining first numerical data of imaging data representing a row of teeth of a pre-identified person. For example, a method **900** may comprise: method step **920** of deriving from the first numerical data or imaging data a first surface model including a plurality of concave appliance surfaces models. For example, a method **900** may comprise: method step **930** of obtaining a second surface model including a plurality of convex appliance surfaces models. For example, a method **900** may comprise: method step **940** of deriving or combining a custom-shaped archform layer model from the first surface model in combination with the second surface model. For example, a method **900** may comprise: method step **950** of 3D printing or otherwise machining a custom-shaped archform layer responsive to the custom-shaped archform layer model. For example, a method **900** may comprise: method step **960** of coating the custom-shaped archform layer to thereby form a multi-unit veneer. Method step **960** may utilize a paint on or paint brush method, performed by a manual, semi-automatic, or automatic process. In one or more exemplary embodiments of the present technology, unless the context requires otherwise, combinable with any other embodiment disclosed herein, a archform layer forming a near-net shape of the spatial extension of a removable dental appliance, for example a multi-unit veneer is coated using an automated or semi-automated manufacturing process utilizing for example a multi-axis, for example a 5-axis, robot technology responsive to manufacturing data, derived from a custom design of the removable dental appliance, for example a multi-unit veneer.

In the context of the manufacturing process steps as described with reference to FIG. **9****,** a description of the removable dental appliance, for example, of the multi-unit veneer may be received and subsequently altered, augmented or otherwise updated. In this context and throughout this disclosure, the term "description", and derivative or similar words shall be understood as being generic to all possible meanings supported by the specification and by the words itself; the meaning shall, however, include herein, without limiting the foregoing and unless the context requires otherwise, computer aided design (CAD) data, computer aided manufacturing (CAM) data, computerized numerical control (CNC) data, two-dimensional virtual models, three-dimensional virtual models, four-dimensional virtual models, and/or grayscale texture patterns. By way of example, and not limitation, a description may include a technical specification of the feature of interest. A technical specification may include one or more descriptions. A description may include a virtual model of a removable dental appliance, for example, of a multi-unit veneer, and a machined shape of the removable dental appliance, for example, of the multi-unit veneer may correlate and, for example, within manufacturing tolerances may match said virtual model.

Without limiting the foregoing and unless the context requires otherwise, all features or other elements as disclosed herein with respect to FIG. **9** shall be deemed herewith disclosed in any combination with each other, in any partial combination with each other, and in any order; and shall be deemed herewith disclosed in combination with all features or other elements as disclosed herein with respect to FIGS. **1** to **8**, and **10** in any combination, in any partial combination, and in any order.

Without limiting the foregoing and unless the context requires otherwise, the removable dental appliance, and the multi-unit veneer referenced with respect to FIG. **9** may represent the same or similar removable dental appliance, e.g., **120**, **210**, **260**, **320**, **340**, **430**, **510**, **610**, **710**, or **890**, the same or similar multi-unit veneer, e.g., **120**, **210**, **260**, **320**, **340**, **430**, **510**, **610**, **710**, or **890**, or the same or similar like elements, respectively, as shown in and/or described with respect to FIGS. **1** to **8**, and **10,** and other figures herein, respectively, and vice versa. Without limiting the foregoing and unless the context requires otherwise, the upper jaw or lower jaw, and the row of teeth referenced with respect to FIG. 9 may represent the same or similar upper jaw or lower jaw, e.g., **110**, **220**, **270**, **310**, **330**, **410**, **550**, **750**, or **812**, the same or similar row of teeth, e.g., **110**, **220**, **270**, **550**, **750**, or **812**, or the same or similar like elements, respectively, as shown in and/or described with respect to FIGS. **1** to **8**, and **10**, and other figures herein, respectively, and vice versa.

Without limiting the foregoing and unless the context requires otherwise, all features or other elements as disclosed herein with respect to FIG. **9** shall be deemed herewith disclosed in any combination with each other, in any partial combination with each other, and in any order; and shall be deemed herewith disclosed in combination with all features or other elements as disclosed herein with respect to FIGS. **1** to **8**, and **10** in any combination, in any partial combination, and in any order. Without limiting the foregoing and unless the context requires otherwise, the method steps **910**, **920**, **930**, **940**, **950**, and **960** referenced with respect to FIG. **9** may represent the same or similar method steps, e.g., **1010**, **1020**, **1030**, or **1040**, or the same or similar like elements, respectively, as described and/or shown with respect to FIGS. **1** to **8**, and **10**, respectively, and vice versa.

FIG. **10** shows an illustration of an exemplary embodiment of a flow diagram for a plurality of method steps for deriving, combining, or modifying iteratively a design of a removable dental appliance in accordance with one or more embodiments of the presently disclosed technology which are combinable with any other embodiment disclosed herein.

Flow diagram **1000** shows one or more other exemplary embodiments, unless the context requires otherwise, combinable with any other embodiment disclosed herein, of a method of designing a removable dental appliance, for example, a multi-unit veneer. The method depicted in diagram **1000** can comprise: method step **1010** of obtaining a virtual model representing a row of teeth of a pre-identified person; method step **1020** of identifying a plurality of first vestibular-facing surface areas on the virtual model of the row of teeth suitable to form capillary interfaces; method step **1030** of identifying undercuts formed by two second vestibular surfaces having between them a geometrical angle that represents an arc of contact of more than 180°; and method step **1040** of deriving or combining a first surface model that includes the plurality of first vestibular-facing surface areas and/or the two second vestibular-facing surface areas.

The method steps **1010**, **1020**, **1030**, and **1040** may be combined in any order and in any partial combination in any order. For example, a method **1000** may comprise: method step **1010** of obtaining a virtual model representing a row of teeth of a pre-identified person. For example, a method **1000** may comprise: method step **1020** of identifying a plurality of first vestibular-facing surface areas on the virtual model of the row of teeth suitable to form capillary interfaces. For example, a method **1000** may comprise: method step **1030** of identifying undercuts formed by two second vestibular surfaces having between them a geometrical angle that represents an arc of contact of more than 180°. For example, a method **1000** may comprise: method step **1040** of deriving or combining a first surface model that includes the plurality of first vestibular-facing surface areas and/or the two second vestibular-facing surface areas. The method step **1040** of deriving may include a step of combining a first surface model that includes the plurality of first vestibular-facing surface areas and the two second vestibular-facing surface areas,

Without limiting the foregoing and unless the context requires otherwise, all features or other elements as disclosed herein with respect to FIG. **10** shall be deemed herewith disclosed in any combination with each other, in any partial combination with each other, and in any order; and shall be deemed herewith disclosed in combination with all features or other elements as disclosed herein with respect to FIGS. **1** to **9** in any combination, in any partial combination, and in any order. Without limiting the foregoing and unless the context requires otherwise, the removable dental appliance, and the multi-unit veneer referenced with respect to FIG. **10** may represent the same or similar removable dental appliance, e.g., **120**, **210**, **260**, **320**, **340**, **430**, **510**, **610**, **710**, or **890**, the same or similar multi-unit veneer, e.g., **120**, **210**, **260**, **320**, **340**, **430**, **510**, **610**, **710**, or **890**, or the same or similar like elements, respectively, as shown in and/or described with respect to FIGS. **1** to **9****,** and other figures herein, respectively, and vice versa.

Without limiting the foregoing and unless the context requires otherwise, the upper jaw or lower jaw, and the row of teeth referenced with respect to FIG. **10** may represent the same or similar upper jaw or lower jaw, e.g., **110**, **220**, **270**, **310**, **330**, **410**, **550**, **750**, or **812**, the same or similar row of teeth, e.g., **110**, **220**, **270**, **550**, **750**, or **812**, or the same or similar like elements, respectively, as shown in and/or described with respect to FIGS. **1** to **9**, and other figures herein, respectively, and vice versa. Without limiting the foregoing and unless the context requires otherwise, all features or other elements as disclosed herein with respect to FIG. **10** shall be deemed herewith disclosed in any combination with each other, in any partial combination with each other, and in any order; and shall be deemed herewith disclosed in combination with all features or other elements as disclosed herein with respect to FIGS. **1** to **9**, in any combination, in any partial combination, and in any order. Without limiting the foregoing and unless the context requires otherwise, the method steps **1010**, **1020**, **1030**, or **1040** referenced with respect to FIG. **10** may represent the same or similar method steps, e.g., **910**, **920**, **930**, **940**, **950**, and **960**, or the same or similar like elements, respectively, as described and/or shown with respect to FIGS. **1** to **9****,** respectively, and vice versa.

It is to be understood that the specific order or hierarchy of operations in the methods or flow charts depicted in FIGS. **9** and **10** and throughout this disclosure are instances of example approaches and can be rearranged while remaining within the disclosed subject matter. For instance, any of the operations depicted in FIGS. **9** and **10** and throughout this disclosure can be omitted, repeated, performed in parallel, performed in a different order, and/or combined with any other of the operations depicted in FIGS. **9** and **10** or described throughout this disclosure.

All the aforementioned embodiments and features and method steps disclosed herein are deemed to be disclosed alone or in any combination, in the disclosed or in reverse order, or in any order as a person skilled in the art would combine and/or order the embodiments, configurations and features and method steps disclosed herein.

Any enumerations of elements herein shall not be deemed conclusive. It should not be assumed that two or more elements in an enumeration are alternative elements. Two or more elements in an enumeration may describe a similar or the same embodiment, element and/or function. One element in an enumeration may be inclusive of another element in the same enumeration.

The various embodiments of the presently disclosed technology and aspects of embodiments of the technology disclosed herein are to be understood not only in the order and context specifically described in this disclosure, but to include any order and any combination thereof. Whenever the context requires, all words used in the singular number shall be deemed to include the plural and vice versa. Words which import one gender shall be applied to any gender wherever appropriate. Whenever the context requires, all options that are listed with the word "and" shall be deemed to include the world "or" and vice versa, and any combination thereof. If applicable, the words "vice versa" shall be deemed to include the term "the other way around." Unless the context herein otherwise requires, the words "include", "for example", "by way of example", "exempli gratia", or "e.g." and derivative or similar terms shall be deemed in each case to be followed by the words "without limitation." The titles of the sections of this specification and the sectioning of the text in separated paragraphs are for convenience of reference only and are not to be considered in construing this specification.

While the present disclosure has been described with reference to various implementations, it will be understood that these implementations are illustrative and that the scope of the present disclosure is not limited to them. Many variations, modifications, additions, and improvements are possible. More generally, implementations in accordance with the present disclosure have been described in the context of particular implementations. Functionality may be separated or combined differently in various implementations of the disclosure or described with different terminology. These and other variations, modifications, additions, and improvements may fall within the scope of the disclosure as defined in the claims that follow.

In respect to industrial applicability, it is stated that all embodiments of this disclosure can be applied to a removable dental appliance, for example, a multi-unit veneer, including, without limitation methods, and systems of designing and manufacturing such removable dental appliances.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

Furthermore, the terms "first", "second", "third", and so on are used to distinguish between items of the same kind. However, none of these terms imply a specific number of such items. These terms do not imply that all such entities items must be present. For example, the "first" and "fourth" items may be present even if the "second" and "third" are absent.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one or more) of the present dependent claims (regardless of the present claim structure). Therefore, the applicant may direct further patent claims towards other claim combinations at a later stage of the prosecution.

## Claims

1. A method of manufacturing a removable dental appliance, the method comprising:
obtaining imaging data storable on one or more non-transitory processor-readable memory representing a row of teeth of a pre-identified person;
deriving from the imaging data a first surface model storable on the one or more non-transitory processor-readable memory, the first surface model includes a plurality of concave appliance surfaces models, at least one concave appliance surface model of the plurality of concave appliance surfaces models correlates to a convex surface area of a corresponding a crown of a tooth included in the row of teeth;
obtaining a second surface model storable on the one or more non-transitory processor-readable memory, the second surface model includes a plurality of convex appliance surfaces models, at least one convex appliance surface model of the plurality of convex appliance surfaces models mimics a corresponding surface of an artificial crown model of a plurality of artificial crown models arranged as a model of a row of artificial teeth; and
deriving an archform layer model storable on the one or more non-transitory processor-readable memory, the archform layer model including the first surface model and the second surface model, the first surface model and the second surface model face opposite virtual sides of the archform layer model, and the archform layer model has a modulation of virtual thickness in a virtual direction substantially along an archform of the archform layer model.

2. The method of claim 1, further comprising:
storing the archform layer model at the one or more non-transitory processor-readable memory in a processor-readable format.

3. The method of claim 2, wherein
the processor-readable format includes at least one of a numerical computer aided design (CAD) format, computer aided manufacturing (CAM) format, or a computer numerical control (CNC) format.

4. The method according to any of the preceding claims, further comprising:
transmitting the archform layer model, in a processor-readable format, to a computer device using a computer network.

5. The method of claim 4, wherein
the processor-readable format includes at least one of a numerical computer aided design (CAD) format, computer aided manufacturing (CAM) format, or a computer numerical control (CNC) format.

6. The method according to any of the preceding claims, further comprising:
shaping an archform layer from a biocompatible material responsive to the archform layer model;
the archform layer is custom-shaped to fit to the row of teeth of the pre-identified person, the archform layer having a first custom-shaped surface, and a second surface, the first custom-shaped surface and the second surface face opposite sides of the archform layer, and the archform layer has a modulation of thickness in a direction substantially along an archform of the archform layer.

7. The method according to any of the preceding claims, wherein
the shaping of the archform layer uses a 3D printing process; and
the biocompatible material includes a UV curable resin.

8. The method according to any of the preceding claims, further comprising:
washing the archform layer.

9. The method according to any of the preceding claims, further comprising:
UV curing the archform layer.

10. The method according to any of the preceding claims, further comprising:
coating the archform layer.

11. The method according to any of the preceding claims, wherein
the coating of the archform layer uses a numerical controlled multi-axis robot technology for painting or air brushing.

12. The method according to any of the preceding claims, wherein
the deriving of the first surface model includes identifying a plurality of first vestibular-facing virtual convex surface areas representing surface areas of crowns of the row of teeth suitable to form a plurality of capillary interfaces with the plurality of concave appliance surfaces models.

13. The method according to any of the preceding claims, wherein:
the deriving of the first surface model includes identifying virtual undercuts formed by two second vestibular virtual surface areas representing surface areas of crowns of the row of teeth having between them a geometrical angle representing a virtual arc of contact of more than 180°.

14. A method of manufacturing a removable dental appliance, the method comprising:
obtaining a technical specification of the removable dental appliance including an oral-facing surface operational to clip-on to or otherwise be held in place by a plurality of vestibular-facing surfaces of a row of teeth of a pre-identified person;
obtaining imaging data, storable on one or more non-transitory processor-readable memory, representing the row of teeth of the pre-identified person;
updating the technical specification, responsive to the imaging data, to form an updated technical specification, the updated technical specification includes a numerical description of a shape of the removable dental appliance; and
transferring the updated technical specification to a manufacturing system using a rapid prototyping technology operational to shape a workpiece responsive to the numerical description of the removable dental appliance.

15. The method of claim 14,
wherein the removable dental appliance includes: an archform layer of biocompatible material custom-shaped to fit the row of teeth, the archform layer having a first custom-shaped surface, and a second surface, the first custom-shaped surface and the second surface face opposite sides of the archform layer; the first custom-shaped surface including a plurality of concave appliance surfaces, a concave appliance surface of the plurality of concave appliance surfaces correlates with a corresponding vestibular-facing convex crown surface of a plurality of corresponding vestibular-facing convex crown surfaces of the row of teeth; and the second surface including a plurality of convex appliance surfaces, a convex appliance surface of the plurality of convex appliance surfaces mimics a corresponding surface of an artificial crown of a plurality of artificial crowns arranged as a row of artificial teeth; and/or
wherein the removable dental appliance is shaped to not encase an oral-facing surface of a crown of a tooth included in the row of teeth when the removable dental appliance is engaged with the row of teeth; and/or
wherein the archform layer has a modulation of thickness in a direction substantially along an archform of the archform layer; and/or
wherein the modulation of thickness has at least two local minima of thickness and at least two local maxima of thickness; and/or
wherein the first custom-shaped surface includes one or more oral-facing surfaces that encase one or more vestibular-facing undercuts of surfaces of a plurality of crowns of the row of teeth when the removable dental appliance is engaged with the row of teeth; and/or
wherein the first custom-shaped surface includes two oral-facing surfaces that form a geometrical angle representing an arc of contact of more than 180° between the first custom-shaped surface and two crowns of two teeth of the row of teeth, when the removable dental appliance is engaged with the row of teeth.
